# EUROPÄISCHE PATENTSCHRIFT

(11) **EP 3 743 305 B1**
(45) Veröffentlichungstag und Bekanntmachung des Hinweises auf die Patenterteilung: **15.12.2021**
(21) Anmeldenummer: 19702019.1
(22) Anmeldetag: 17.01.2019
(51) Int. Cl.: B60L 7/18, H02M 5/458, B60L 58/12, B60L 50/51, B60L 50/53, B60L 15/00, B60L 9/28, H02J 7/02, H02J 7/34, H02J 7/00

(54) **VERFAHREN ZUR REGELUNG EINES BATTERIESTROMS EINER TRAKTIONSBATTERIE**
METHOD FOR CONTROLLING A BATTERY CURRENT OF A TRACTION BATTERY
PROCÉDÉ DE RÉGULATION D'UN COURANT DE BATTERIE D'UNE BATTERIE DE TRACTION

(30) Priorität: 28.02.2018 DE 102018203015
(43) Veröffentlichungstag der Anmeldung: 02.12.2020
(73) Patentinhaber: Siemens Mobility GmbH, 81739 München (DE)
(72) Erfinder: HASSLER, Stefan, 91281 Kirchenthumbach (DE)
(86) Internationale Anmeldenummer: PCT/EP2019/051115
(87) Internationale Veröffentlichungsnummer: WO 2019/166151

(56) Entgegenhaltungen:
- JP-A- 2006 087 299
- US-A1- 2003 053 324
- US-A1- 2012 000 739

## Beschreibung

Die Erfindung betrifft ein Verfahren zur Regelung eines Batteriestroms einer Transaktionsbatterie eines Traktionssystems. Ferner betrifft die Erfindung ein Traktionssystem, aufweisend eine Traktionsbatterie, eine Gleichrichtereinheit und einen Zwischenkreis.

Ein Traktionssystem von elektrisch angetriebenen Schienenfahrzeugen, insbesondere von Triebfahrzeugen, umfasst in der Regel einen Transformator zur Wandlung einer Wechselspannung eines Bahnstromnetzes, eine GleichrichterEinheit (beispielsweise einen Vierquadrantensteller (4QS)), einen (Spannungs-)Zwischenkreis sowie einen Traktionsumrichter (beispielsweise einen Pulswechselrichter) zur Versorgung eines oder mehrerer elektrischer Traktionsmotoren. In der Anwendung eines solchen Traktionssystems besteht die Anforderung, eine Traktionsbatterie in das Traktionssystem zu integrieren. Damit soll die Möglichkeit geschaffen werden, auch ohne Anbindung an die Netzspannung den Zwischenkreis aus der Traktionsbatterie zu versorgen, sowie die Traktionsbatterie während einer Anbindung an die Netzspannung zu laden, wobei gleichzeitig der Traktionsumrichter in Betrieb ist. Eine Anwendung ergibt sich beispielsweise für Schienenfahrzeuge während einer Fahrt unter einer Oberleitung beziehungsweise während einer Fahrt auf einer Strecke ohne Oberleitung rein über die Traktionsbatterie.

Eine Traktionsbatterie kann beispielsweise über einen Gleichstromsteller, beispielsweise einen DC/DC-Steller, mit dem Zwischenkreis verbunden werden. Die Gleichrichter-Einheit hat dabei die Aufgabe, als Regelungsziel die Zwischenkreisspannung im Zwischenkreis konstant zu halten. Zum Laden der Traktionsbatterie wird der Gleichstromsteller als Tiefsetzsteller betrieben. Ein Stromregler im Gleichstromsteller sorgt dafür, dass ein definierter Soll-Ladestrom umgesetzt wird. Durch Ansteuern von Schaltelementen im Gleichstromsteller wird der Ist-Ladestrom auf den vorgegebenen Soll-Ladestrom zum Laden der Traktionsbatterie gestellt. Die Kombination aus Gleichstromsteller und Traktionsbatterie wirkt am Zwischenkreis wie ein zusätzlicher Verbraucher.

Eine derartige Konfiguration eines Traktionssystems besitzt insbesondere den Nachteil, dass durch aktives Schalten des Gleichstromstellers zum Einstellen des definierten Ladestroms Schaltverluste durch den Gleichstromsteller verursacht werden.

Aus dem Dokument JP 2006 087299 A ist ein Antriebssystem für ein Schienenfahrzeugs bekannt, welchem von einer Oberleitung ein Gleichstrom zugeführt wird, wobei ein Glättungskondensator vorgesehen ist, welcher parallel zu einem Wechselrichter und einem Gleichstromsteller angeordnet ist, und wobei ferner ein Energiespeicher vorgesehen ist, welcher mit dem Gleichstromsteller verbunden ist. Aus dem Dokument US 2012/000739 AI ist ein Schienenfahrzeug mit einem Haupttransformator bekannt, wobei der Haupttransformator einen primärseitigen Wechselstrom von einer Oberleitung in einen sekundärseitigen Wechselstrom transformiert, wobei ein Gleichrichter mit der Sekundärseite des Haupttransformators verbunden ist, welcher den Wechselstrom in einen Gleichstrom wandelt, wobei ein Energiespeicher mit dem Gleichrichter verbunden ist, und wobei der Energiespeicher dazu dient, bei einer Unterbrechung der Zuführung des Wechselstroms Hilfsbetriebe des Schienenfahrzeugs zu versorgen.

Es ist eine Aufgabe der Erfindung, ein Verfahren zur Regelung eines Batteriestroms einer Traktionsbatterie eines Traktionssystems, sowie ein Traktionssystem anzugeben, die den oben genannten Nachteil überwinden.

Ein erster Aspekt der Erfindung betrifft ein Verfahren zur Regelung eines Batteriestroms einer Traktionsbatterie eines Traktionssystems. Weitere Implementierungen des Verfahrens sind in den zugehörigen Unteransprüchen offenbart.

Gemäß dem Verfahren wandelt eine Gleichrichter-Einheit des Traktionssystems eine Netzspannung mittels eines vorgebbaren Einspeisestroms in eine regelbare Zwischenkreisspannung eines Zwischenkreises des Traktionssystems. Ein Zwischenkreis-Spannungsregler regelt einen Spannungsistwert der Zwischenkreisspannung auf einen Spannungssollwert der Zwischenkreisspannung und gibt eine erste Ausgangsgröße vor. Ein Batterie-Stromregler regelt einen Stromistwert des Batteriestroms auf einen Stromsollwert des Batteriestroms und gibt eine zweite Ausgangsgröße vor.

Die erste Ausgangsgröße des Zwischenkreis-Spannungsreglers wird mit der zweiten Ausgangsgröße des Batterie-Stromreglers zur Bildung einer Vorgabegröße für den Einspeisestrom beaufschlagt. Mittels des anhand der Vorgabegröße vorgegebenen Einspeisestroms wird der Stromistwert des Batteriestroms zu dessen Regelung, insbesondere automatisch, nachgestellt.

Dieses Verfahren hat den Vorteil, dass eine Regelung eines Batteriestroms durch einen separaten Gleichstromsteller nicht mehr erforderlich ist. Vielmehr erfolgt eine Regelung des Batteriestroms verfahrensgemäß mittels des Zwischenkreis-Spannungsreglers mit dem unterlagerten Batterie-Stromregler. Durch Beaufschlagen der Ausgangsgröße des Zwischenkreis-Spannungsreglers mit der Ausgangsgröße des Batterie-Stromreglers wird eine Vorgabegröße für den Einspeisestrom vorgegeben. Der vorgegebene Einspeisestrom wird über die Gleichrichter-Einheit eingestellt. Durch unmittelbares Berücksichtigen einer Batterie-Stromregelung zur Vorgabe des definierten Einspeisestroms wird der Stromistwert des Batteriestroms zu dessen Regelung automatisch mittels des vorgegebenen Einspeisestroms nachgestellt. Bei dem vorliegenden Verfahren ist das Regelungsziel der Gleichrichter-Einheit somit nicht mehr die Regelung der Zwischenkreisspannung, wie bei herkömmlichen Lösungen, sondern die Regelung des Batteriestroms mittels eines vorgegebenen Einspeisestroms. Die Zwischenkreisspannung ergibt sich dabei (automatisch) aus der Batteriespannung der Traktionsbatterie.

Das beschriebene Regelungsverfahren ermöglicht somit das Vorgeben eines definierten Einspeisestroms unter Berücksichtigung einer Regelung des Batteriestroms, sodass durch Vorgeben des definierten Einspeisestroms automatisch auch der Batteriestrom entsprechend nachgestellt wird.

Auf diese Weise ist ein separates Ansteuern eines Gleichstromstellers zum Einstellen des Stromistwertes des Batteriestroms an der Traktionsbatterie nicht mehr notwendig. Dadurch werden Schaltverluste aufgrund eines aktiv geschalteten Gleichstromstellers vermieden. Vielmehr ist bei dem Verfahren der erläuterten Art kein aktiv geschalteter Gleichstromsteller mehr notwendig. Die Regelung beziehungsweise das Nachstellen des Batteriestroms erfolgt verfahrensgemäß innerhalb der beziehungsweise unterlagert zur Regelung des Einspeisestroms. Der Einspeisestrom wird dabei durch die Gleichrichter-Einheit zum Stellen des Spannungsistwertes der Zwischenkreisspannung auf einen vorgegebenen Spannungssollwert der Zwischenkreisspannung eingestellt.

Gemäß einer Ausgestaltung des Verfahrens wird die Traktionsbatterie ohne Zwischenschalten eines Gleichstromstellers an den Zwischenkreis des Traktionssystems angebunden. Dies hat den Vorteil, dass Kosten, Bauraum und Gewicht durch Wegfall eines separaten Gleichstromstellers eingespart werden können. Ferner kann Energie eingespart werden, da, wie oben bereits erläutert, Schaltverluste des Gleichstromstellers nicht mehr vorhanden sind. Vielmehr muss der Strom aus der bzw. in die Traktionsbatterie nicht mehr über den Gleichstromsteller fließen, wodurch keine Verluste im Gleichstromsteller verursacht werden.

Darüber hinaus sind gegebenenfalls weitere Kosten- und Gewichtseinsparungen durch Wegfall von Filtern zur Filterung von Oberschwingungen im Zwischenkreis möglich. Durch eine unmittelbare Regelung des Batteriestroms mittels eines vorgegebenen Einspeisestroms, der über die Gleichrichtereinheit vorgegeben wird, ergeben sich die Zwischenkreisspannung und folglich mittelbar auch die Batteriespannung aus der oben erläuterten Regelung. Dadurch werden die Zwischenkreisspannung und damit auch die Batteriespannung nahezu optimal eingestellt. Auch auf diese Weise können Oberschwingungen im Zwischenkreis, wie sie bei herkömmlichen Lösungen unter Umständen auftreten, durch das vorliegende Regelungsverfahren reduziert werden. Die Traktionsbatterie kann die noch verbleibenden Oberschwingungen im Zwischenkreis über ihren kleinen Innenwiderstand problemlos aufnehmen. Falls dennoch nötig, kann eine einfache Drossel zwischen die Traktionsbatterie und den Zwischenkreis geschaltet sein.

Gemäß einer weiteren Ausgestaltung des Verfahrens gibt die erste Ausgangsgröße des Zwischenkreis-Spannungsreglers eine erste Sollgröße für den Einspeisestrom vor, wobei die zweite Ausgangsgröße des Batterie-Stromreglers eine zweite Sollgröße für den Einspeisestrom vorgibt. Die Vorgabegröße wird aus einer Summe der ersten und zweiten Sollgröße für den Einspeisestrom gebildet. Die Vorgabegröße gibt somit einen Stromsollwert für den Einspeisestrom beziehungsweise den Zwischenkreisstrom vor. In diesen Implementierungen des Verfahrens wird zusätzlich ein Zwischenkreis-Stromregler eingesetzt, der einen Stromistwert des Einspeisestroms auf die Vorgabegröße regelt und eine entsprechende Steuergröße vorgibt. Die Gleichrichter-Einheit wird über die Steuergröße zum Nachstellen des Stromistwertes des Einspeisestroms angesteuert. Zum Beispiel können ein oder mehrere Schaltmittel innerhalb der Gleichrichter-Einheit über die Steuergröße angesteuert werden zum Einstellen des entsprechend geforderten Einspeisestroms.

Bei dieser Ausgestaltung umfasst die Regelung somit eine Kaskade aus einem Zwischenkreis-Spannungsregler mit der oben erläuterten Funktion, wobei dessen Ausgang mit dem Ausgang des unterlagerten Batterie-Stromreglers gemäß dem oben erläuterten Vorgehen beaufschlagt wird, und einem Zwischenkreis-Stromregler, dem die Vorgabegröße als Summe der ersten und zweiten Sollgröße des Zwischenkreis-Spannungsreglers und des Batterie-Stromreglers übergeben wird. Der Zwischenkreis-Stromregler regelt sodann den Stromistwert des Einspeisestroms auf diese Vorgabegröße. Eine derartige Regelungskaskade ermöglicht eine zuverlässige Regelung auf den vorgegebenen Einspeisestrom, der über die Gleichrichtereinheit eingestellt wird.

Gemäß einer weiteren Ausgestaltung des Verfahrens kann ein erläuterter Zwischenkreis-Stromregler auch entfallen. In diesem Fall kann die über die erste und zweite Ausgangsgröße des Zwischenkreis-Spannungsreglers und des Batterie-Stromreglers gebildete Vorgabegröße zum Beispiel unmittelbar ein Steuersignal zur Ansteuerung von Schaltmitteln innerhalb der Gleichrichter-Einheit sein, wobei die GleichrichterEinheit anhand dieses Steuersignals einen entsprechenden (mittelbar vorgegebenen) Einspeisestrom einstellt und auf diese Weise auch den Stromistwert des Batteriestroms entsprechend nachstellt.

Gemäß einer weiteren Ausgestaltung des Verfahrens wird der Zwischenkreis-Spannungsregler auf Basis des Stromsollwertes des Batteriestroms dadurch vorgesteuert, dass der Stromsollwert des Batteriestroms in eine Vorgabe-Berechnung des Spannungssollwertes der Zwischenkreisspannung einfließt. Zum Beispiel kann der Spannungssollwert der Zwischenkreisspannung dadurch vorgegeben werden, dass der Stromsollwert des Batteriestroms mit einem spezifischen Innenwiderstand der Traktionsbatterie multipliziert wird und das Ergebnis mit einem Spannungsistwert der Batteriespannung beaufschlagt wird. Dadurch kann ein Spannungssollwert der Zwischenkreisspannung vorgegeben werden, der größer ist als der Spannungsistwert der Traktionsbatterie, wodurch ein vorgegebener Soll-Ladestrom zum Laden der Traktionsbatterie vorgegeben werden kann. Die oben erläuterte Regelung kann sodann unter Berücksichtigung dieses Soll-Ladestroms durchgeführt werden.

Die erläuterte Vorsteuerung des Zwischenkreis-Spannungsreglers ermöglicht eine Regelung des Spannungsistwertes der Zwischenkreisspannung auf einen Spannungssollwert der Zwischenkreisspannung, der bereits den erforderlichen beziehungsweise gewünschten Batteriestrom berücksichtigt. Dies erlaubt eine präzise, schnelle und dynamische Regelung. Ferner können die einzelnen Regelungsziele des Zwischenkreis-Spannungsreglers und des Batterie-Stromreglers auf diese Weise aufeinander ausbalanciert werden, ohne dass ein jeweiliger Regler starke Regelungsabweichungen des anderen Reglers kompensieren muss.

Gemäß einer weiteren Ausgestaltung des Verfahrens wird eine Differenz aus einer maximalen Einspeiseleistung der Gleichrichter-Einheit in den Zwischenkreis und einer aus dem Zwischenkreis entnommenen Istleistung eines Traktionsumrichters und, sofern vorgesehen, eines Hilfsbetriebeumrichters des Traktionssystems berechnet. Aus dieser Differenz wird ein maximaler Batteriestromwert des Batteriestroms berechnet. Der so berechnete maximale Batteriestromwert des Batteriestroms gibt eine obere Grenze für den Stromsollwert des Batteriestroms zur oben erläuterten Regelung vor. Diese Maßnahmen berücksichtigen eine begrenzte maximale Einspeiseleistung der Gleichrichter-Einheit. Es wird situationsgerecht/dynamisch nur derjenige Anteil der Einspeiseleistung der Gleichrichter-Einheit in den Zwischenkreis zum Nachstellen des Stromistwertes des Batteriestroms über den vorgegebenen Einspeisestrom herangezogen, der nach Abzug einer Traktions-Istleistung (eines Traktionsumrichters und/oder eines Hilfsbetriebeumrichters) von der maximalen Einspeiseleistung der Gleichrichter-Einheit verfügbar bleibt. Dadurch wird einem Leistungsverbrauch eines Traktionsumrichters und gegebenenfalls eines Hilfsbetriebeumrichters des Traktionssystems immer Vorrang gegenüber einem Leistungsverbrauch zum Speisen der Traktionsbatterie eingeräumt. Somit wird eine ausfallsichere Traktion während eines Einspeisens von elektrischer Energie in die Traktionsbatterie über die oben erläuterte Regelung gewährleistet. Die Regelung des Batteriestroms kann auf diese Weise dynamisch an die momentane Leistungsbilanz des Traktionssystems angepasst werden. Diese Maßnahmen finden vorteilhaft Anwendung in einem Anwendungsbetrieb des Traktionssystems (z.B. in einem Schienenfahrzeug) über eine Einspeiseleistung aus der Gleichrichter-Einheit, wobei letztere aus einem elektrischen Netz, zum Beispiel einer Oberleitung, elektrische Energie entnimmt.

In Ausgestaltungen, in denen die Gleichrichter-Einheit mehrere Zwischenkreise speist, sind gegebenenfalls die aus den weiteren Zwischenkreisen entnommenen Istleistungsanteile, beispielsweise von anderen Traktionsumrichtern und/oder anderen Hilfsbetriebeumrichtern, die an die weiteren Zwischenkreise angebunden sind, zusätzlich von der maximalen Einspeiseleistung der Gleichrichter-Einheit abzuziehen.

Gemäß einer weiteren Ausgestaltung des Verfahrens wird in einem Antriebsbetrieb des Traktionssystems über eine Einspeiseleistung aus der Gleichrichter-Einheit eine Differenz aus der maximalen Einspeiseleistung der Gleichrichter-Einheit und der aus dem Zwischenkreis entnommenen Istleistung des Hilfsbetriebeumrichters des Traktionssystems berechnet und daraus eine maximale Entnahmeleistung des Traktionsumrichters aus dem Zwischenkreis berechnet. Die maximale Entnahmeleistung des Traktionsumrichters aus dem Zwischenkreis wird sodann in ein maximales Antriebsmoment einer mittels des Traktionsumrichters betriebenen Antriebsmaschine umgerechnet. Auch in diesen Implementierungen ist gegebenenfalls die erläuterte Differenz nur aus einem Anteil der maximalen Einspeiseleistung der Gleichrichter-Einheit pro Zwischenkreis zu berechnen, falls die Gleichrichter-Einheit an mehrere Zwischenkreise angebunden ist und aus den mehreren Zwischenkreisen entsprechende Istleistungen entnommen werden. Die genannten Maßnahmen haben den Vorteil, dass ein Leistungsverbrauch eines Hilfsbetriebeumrichters des Traktionssystems berücksichtigt werden kann, wobei ein maximales Antriebsmoment einer mittels des Traktionsumrichters betriebenen Antriebsmaschine derart begrenzt wird, dass die Antriebsmaschine fehlerfrei und ausfallsicher über eine entsprechende maximale Entnahmeleistung des Traktionsumrichters angetrieben werden kann. Dabei wird verhindert, dass ein Sollmoment zum Antrieb der Antriebsmaschine vorgegeben werden kann, das eine maximal mögliche Entnahmeleistung des Traktionsumrichters übersteigt.

In Verbindung mit den oben erläuterten Maßnahmen kann eine entsprechend berechnete maximale Entnahmeleistung des Traktionsumrichters, insbesondere automatisch, in eine Vorgabe eines maximal erlaubten Batteriestromwertes des Batteriestroms einfließen. Je nach entnommener Leistung des Traktionsumrichters aus dem Zwischenkreis kann der Batteriestromwert des Batteriestroms als Stromsollwert entsprechend dynamisch angepasst werden. Dabei kann ein maximal erlaubter Batteriestromwert als Sollstrom des Batteriestroms entsprechend reduziert beziehungsweise nahezu auf null gesetzt werden, wenn die gegenwärtig aus dem Zwischenkreis entnommenen Istleistungen des Traktionsumrichters und ggf. des Hilfsbetriebeumrichters eine maximale Einspeiseleistung der Gleichrichter-Einheit nahezu oder vollständig ausschöpfen.

Gemäß einer weiteren Ausgestaltung des Verfahrens wird in einem Antriebsbetrieb des Traktionssystems über eine Einspeiseleistung aus der Traktionsbatterie eine Differenz aus einer maximalen Einspeiseleistung der Traktionsbatterie und der aus dem Zwischenkreis entnommenen Istleistung des Hilfsbetriebeumrichters des Traktionssystems berechnet und daraus eine maximale Entnahmeleistung des Traktionsumrichters aus dem Zwischenkreis berechnet. Die maximale Entnahmeleistung des Traktionsumrichters aus dem Zwischenkreis wird in ein maximales Antriebsmoment der mittels des Traktionsumrichters betriebenen Antriebsmaschine umgerechnet. Auch in diesen Implementierungen wird gegebenenfalls die maximale Einspeiseleistung nur aus einem Anteil der maximalen Einspeiseleistung der Traktionsbatterie pro Zwischenkreis berechnet, falls die Traktionsbatterie an mehrere Zwischenkreise angebunden ist und aus den mehreren Zwischenkreisen entsprechende Istleistungen entnommen werden. Ein zur maximalen Einspeiseleistung der Traktionsbatterie korrespondierender maximaler Batteriestrom kann entsprechend an einen maximalen Batteriestrom angepasst werden, der im Rahmen der oben erläuterten Regelung vorgegeben wird. Idealerweise entspricht somit der für eine maximale Einspeiseleistung der Traktionsbatterie notwendige Batteriestrom dem maximalen Batteriestrom, der in der obigen Regelung berücksichtigt wird. Auf diese Weise kann ein Entladestrom der Traktionsbatterie an einen Ladestrom der Traktionsbatterie angeglichen werden.

Die genannten Maßnahmen besitzen den Vorteil, dass eine aus dem Zwischenkreis entnommene Istleistung des Hilfsbetriebsumrichters zum Einstellen einer maximalen Entnahmeleistung des Traktionsumrichters zum Antrieb einer Antriebsmaschine berücksichtigt wird. Dadurch wird verhindert, dass die Traktionsbatterie zur Speisung sowohl des Traktionsumrichters als auch des Hilfsbetriebeumrichters überlastet wird. Ferner wird verhindert, dass ein Sollmoment der Antriebsmaschine vorgegeben werden kann, das die maximal mögliche Entnahmeleistung des Traktionsumrichters übersteigt. Die genannten Maßnahmen können beispielsweise Anwendung finden in einem Betrieb des Traktionssystems (z.B. in einem Schienenfahrzeug) rein aus der Traktionsbatterie ohne Anbindung des Traktionssystems an ein elektrisches Versorgungsnetz, zum Beispiel ohne Anbindung an eine Oberleitung.

Gemäß einer weiteren Ausgestaltung des Verfahrens wird in einem Bremsbetrieb des Traktionssystems aus einem maximalen Batteriestromwert des Batteriestroms und dem Spannungsistwert der Zwischenkreisspannung eine maximale Einspeiseleistung in die Traktionsbatterie berechnet. Eine maximale Rückeinspeiseleistung des Traktionsumrichters in den Zwischenkreis wird unter Berücksichtigung der maximalen Einspeiseleistung in die Traktionsbatterie berechnet. Die maximale Rückeinspeiseleistung des Traktionsumrichters in den Zwischenkreis wird in ein maximales Bremsmoment einer mittels des Traktionsumrichters betriebenen Antriebsmaschine umgerechnet. Durch die genannten Maßnahmen wird verhindert, dass im Falle eines Bremsbetriebes des Traktionssystems eine zu hohe Leistung in die Traktionsbatterie rückeingespeist wird, wodurch die Traktionsbatterie Schaden nehmen könnte. Durch Begrenzen eines maximalen Bremsmomentes einer mittels des Traktionsumrichters betriebenen Antriebsmaschine wird auch die maximale Rückeinspeiseleistung des Traktionsumrichters im Bremsbetrieb der Antriebsmaschine begrenzt. Dies führt schließlich zu einer Begrenzung einer maximalen Einspeiseleistung in die Traktionsbatterie im Bremsbetrieb, wodurch die Traktionsbatterie geschont wird. Die erläuterten Maßnahmen finden vorteilhaft Anwendung in einem Bremsbetrieb des Traktionssystems ohne Anbindung an ein elektrisches Netz, rein unter Anbindung der Traktionsbatterie an das Traktionssystem.

Auch in dieser Ausgestaltung kann der maximale Batteriestromwert, der die maximale Einspeiseleistung in die Traktionsbatterie beeinflusst, an den maximalen Batteriestromwert angepasst werden, der sich aus den obigen Regelungsmaßnahmen im Zusammenhang mit den weiteren Aspekten der hier erläuterten Art ergibt.

Zusätzlich oder alternativ zu den genannten Maßnahmen kann ein Batterie-Überstromschutz-Regler eingesetzt werden. Dieser Batterie-Überstromschutz-Regler regelt den Stromistwert des Batteriestroms auf den maximalen Batteriestromwert des Batteriestroms und gibt eine Differenzgröße für den Batteriestrom vor. Aus der Differenzgröße für den Batteriestrom und dem Spannungsistwert der Zwischenkreisspannung wird eine Differenzleistung berechnet. Die maximale Einspeiseleistung in die Traktionsbatterie wird sodann um die Differenzleistung reduziert. Diese Maßnahmen stellen ergänzende oder alternative Sicherheitsmaßnahmen dar, um die Traktionsbatterie vor zu hohen Strömen zu schützen, wenn ein gemessener Batteriestrom (Stromistwert des Batteriestroms) einen maximal erlaubten Batteriestromwert des Batteriestroms übersteigt. Die Funktion des Batterie-Überstromschutz-Reglers kann zum Beispiel dann vorteilhaft zum Tragen kommen, wenn ein Zwischenkreisstrom im Zwischenkreis trotz einer vorgegebenen maximalen Rückeinspeiseleistung des Traktionsumrichters in einem Bremsbetrieb des Traktionssystems (kurzzeitig) ansteigt. Dann kann über den Batterie-Überstromschutz-Regler einer Überlastung der Traktionsbatterie vorgebeugt werden.

Ein zweiter Aspekt der Erfindung betrifft ein Traktionssystem. Das Traktionssystem weist eine Traktionsbatterie, eine Gleichrichter-Einheit und einen Zwischenkreis auf. Die Gleichrichter-Einheit ist eingerichtet eine Netzspannung mittels eines vorgebbaren Einspeisestroms in eine regelbare Zwischenkreisspannung des Zwischenkreises zu wandeln. Die Traktionsbatterie ist an den Zwischenkreis angebunden. Ferner weist das Traktionssystem einen Zwischenkreis-Spannungsregler auf, der für eine Regelung eines Spannungsistwertes der Zwischenkreisspannung auf einen Spannungssollwert der Zwischenkreisspannung implementiert ist, wobei durch den Zwischenkreis-Spannungsregler eine erste Ausgangsgröße vorgebbar ist. Zudem weist das Traktionssystem einen Batterie-Stromregler auf, der für eine Regelung eines Stromistwertes eines Batteriestroms der Traktionsbatterie auf einen Stromsollwert des Batteriestroms der Traktionsbatterie implementiert ist, wobei durch den Batterie-Stromregler eine zweite Ausgangsgröße vorgebbar ist.

Ein Ausgang des Zwischenkreis-Spannungsreglers und ein Ausgang des Batterie-Stromreglers sind verbunden, wodurch die erste Ausgangsgröße des Zwischenkreis-Spannungsreglers mit der zweiten Ausgangsgröße des Batterie-Stromreglers zur Bildung einer Vorgabegröße für den Einspeisestrom beaufschlagbar ist. Mittels des anhand der Vorgabegröße vorgebbaren Einspeisestroms ist somit der Stromistwert des Batteriestroms zu dessen Regelung (automatisch) nachstellbar.

Ein derartiges Traktionssystem stellt eine Regelungsstruktur bereit, die einen Spannungsregler mit einem unterlagerten Stromregler aufweist. Durch Zusammenschalten der Ausgänge des Zwischenkreis-Spannungsreglers und des Batterie-Stromreglers wird eine Regelung der Zwischenkreisspannung mit einer Regelung des Batteriestroms verknüpft. Dadurch ist eine Vorgabegröße einstellbar, über die ein Einspeisestrom vorgebbar ist. Der entsprechend vorgegebene Einspeisestrom berücksichtigt dabei automatisch einen über die Regelung vorgebbaren Stromistwert des Batteriestroms, sodass dieser automatisch nachstellbar ist.

Im Traktionssystem der erläuterten Art ist keine separate Regelung eines Batteriestroms über einen separaten Gleichstromsteller erforderlich. Vielmehr ist die Regelung des Traktionssystems derart implementiert, dass diese unmittelbar innerhalb einer Steuerung der GleichrichterEinheit erfolgen kann. Die Gleichrichter-Einheit ist somit derart implementiert, dass durch diese unmittelbar ein Einspeisestrom im Zwischenkreis vorgebbar ist, über den automatisch auch der Batteriestrom der Traktionsbatterie nachstellbar ist. Auf diese Weise können Schaltungsverluste eines aktiv angesteuerten separaten Gleichstromstellers zum Einstellen eines definierten Batteriestroms vermieden werden. Gemäß einer Ausgestaltung des Traktionssystems ist die Traktionsbatterie ohne Zwischenschalten eines Gleichstromstellers an den Zwischenkreis des Traktionssystems angebunden. In dieser Ausgestaltung entfällt der Gleichstromsteller vollständig. Die Traktionsbatterie ist, abgesehen von etwaige Drossel- oder Filterelementen, unmittelbar an den Zwischenkreis angeschlossen. Diese Ausführungsformen haben den Vorteil, dass durch Weglassen des Gleichstromstellers Kosten, Bauraum, Gewicht und Energie eingespart werden können. Damit kann das Traktionssystem kostengünstiger, kompakter, leichter und effizienter aufgebaut werden.

Das Traktionssystem der erläuterten Art kann derart eingerichtet sein, dass mittels einer an den verbundenen Ausgängen des Zwischenkreis-Spannungsreglers und des Batterie-Stromreglers vorgegebenen Vorgabegröße (Steuergröße) unmittelbar eine Steuerung von Schaltelementen der Gleichrichter-Einheit durchführbar ist. Dadurch kann mittelbar ein bestimmter Einspeisestrom vorgegeben werden, der über die Gleichrichter-Einheit einstellbar ist. In diesen Fällen repräsentiert die Vorgabegröße beispielsweise ein Schaltverhältnis (so genannter _{"}Duty Cycle") bzw. einen Aussteuergrad von Schaltmitteln in der Gleichrichter-Einheit.

Gemäß einer weiteren Ausgestaltung kann das Traktionssystem auch derart eingerichtet sein, dass durch die erste Ausgangsgröße des Zwischenkreis-Spannungsreglers eine erste Sollgröße für den Einspeisestrom vorgebbar ist und durch die zweite Ausgangsgröße des Batterie-Stromreglers eine zweite Sollgröße für den Einspeisestrom vorgebbar ist, wobei die Vorgabegröße eine Summe aus der ersten und zweiten Sollgröße für den Einspeisestrom ist. Dabei weist das Traktionssystem einen Zwischenkreis-Stromregler auf, der für eine Regelung eines Stromistwertes des Einspeisestroms auf die Vorgabegröße implementiert ist. Durch den Zwischenkreis-Stromregler ist somit eine Steuergröße vorgebbar, über die die GleichrichterEinheit zum Nachstellen des Stromistwertes des Einspeisestroms ansteuerbar ist. In dieser Ausgestaltung weist das Traktionssystem somit eine Regelungskaskade aus einem Zwischenkreis-Spannungsregler mit unterlagertem Batterie-Stromregler und einem Zwischenkreis-Stromregler auf. Letzterer erhält zur Regelung des Stromistwertes des Einspeisestroms die erläuterte Vorgabegröße, die aus den verbundenen Ausgängen des Zwischenkreis-Spannungsreglers und des Batterie-Stromreglers stammt. Der Zwischenkreis-Stromregler gibt sodann eine Steuergröße zum Ansteuern der Gleichrichter-Einheit zum Einstellen des entsprechenden Einspeisestroms im Zwischenkreis vor. In diesen Fällen repräsentiert die vom Zwischenkreis-Stromregler vorgegebene Steuergröße beispielsweise ein Schaltverhältnis (so genannter "Duty Cycle") bzw. einen Aussteuergrad von Schaltmitteln in der Gleichrichter-Einheit.

Gemäß einer weiteren Ausgestaltung des Traktionssystems ist der Zwischenkreis-Spannungsregler innerhalb einer ersten Steuerungskomponente der Gleichrichter-Einheit implementiert und der Batterie-Stromregler innerhalb einer zweiten Steuerungskomponente der Gleichrichter-Einheit implementiert. Falls ein oben erläuterter Zwischenkreis-Stromregler vorgesehen ist, kann auch dieser innerhalb einer Steuerungskomponente der Gleichrichter-Einheit, zum Beispiel innerhalb der ersten Steuerungskomponente der GleichrichterEinheit, implementiert sein. In allen diesen Ausgestaltungen des Traktionssystems sind die Komponenten zur Regelung des Batteriestroms der oben erläuterten Art somit innerhalb der Gleichrichter-Einheit beziehungsweise innerhalb einer entsprechenden Steuerung der Gleichrichter-Einheit implementiert. Steuerungskomponenten herkömmlicher Lösungen zum Ansteuern eines separaten Gleichstromstellers zum Einstellen eines gewünschten Batteriestroms können somit entfallen. Zum Beispiel kann die erste Steuerungskomponente ein Signalprozessor der Gleichrichter-Einheit sein, während die zweite Steuerungskomponente eine übergeordnete Steuerung der Gleichrichter-Einheit sein kann.

Gemäß einer weiteren Ausgestaltung weist das Traktionssystem ferner einen Traktionsumrichter, eine Steuerungskomponente des Traktionsumrichters und eine Traktionssystem-Steuerung auf. Die Steuerungskomponente des Traktionsumrichters ist mittels der Traktionssystem-Steuerung an die zweite Steuerungskomponente der Gleichrichter-Einheit angebunden. Eine derartige Ausgestaltung des Traktionssystem ermöglicht eine Signalkommunikation zwischen der Steuerungskomponente des Traktionsumrichters und der zweiten Steuerungskomponente der Gleichrichter-Einheit zur Durchführung der oben genannten Regelungsstruktur.

Gemäß einer weiteren Ausgestaltung weist das Traktionssystem ferner einen Batterie-Überstromschutz-Regler auf, der für eine Regelung des Stromistwertes des Batteriestroms auf einen maximalen Batteriestromwert des Batteriestroms implementiert ist. An einem Ausgang des Batterie-Überstromschutz-Reglers ist eine Differenzgröße für den Batteriestrom vorgebbar, wobei der Ausgang des Batterie-Überstromschutz-Reglers mit dem Spannungsistwert der Zwischenkreisspannung beaufschlagbar ist. Dadurch kann eine Differenzleistung ermittelt werden zur Reduktion einer maximalen Einspeiseleistung in die Traktionsbatterie um die ermittelte Differenzleistung. Durch den Batterie-Überstromschutz-Regler der erläuterten Art ist eine Sicherheitsmaßnahme im Traktionssystem geschaffen, um zu hohe Batterieströme in der Traktionsbatterie zu verhindern. Der Batterie-Überstromschutz-Regler ist derart implementiert, eine maximale Einspeiseleistung in die Traktionsbatterie zu reduzieren, wenn der gemessene Batteriestrom größer als ein maximaler Batteriestromwert ist. In diesem Fall liegt am Ausgang des Batterie-Überstromschutz-Reglers eine Steuergröße (Differenzgröße für den Batteriestrom) an, durch die die erläuterte Differenzleistung ermittelbar ist. Die maximale Einspeiseleistung kann anschließend über die ermittelte Differenzleistung reduziert werden. Durch die reduzierte maximale Einspeiseleistung kann unter Zuhilfenahme eines gemessenen Spannungsistwertes der Zwischenkreisspannung ein maximal erlaubter Batteriestromwert eingestellt werden. Auf diese Weise wird verhindert, dass die Traktionsbatterie durch eine zu hohe Einspeiseleistung beschädigt wird.

Gemäß einer weiteren Ausgestaltung ist das Traktionssystem vorteilhaft eingerichtet, ein Verfahren der oben erläuterten Art durchzuführen.

Das Traktionssystem der erläuterten Art kann beispielsweise in einem Schienenfahrzeug eingesetzt werden.

Sämtliche Aspekte, Maßnahmen und Vorgaben des erläuterten Regelungsverfahrens gemäß dem ersten Aspekt der Erfindung finden Anwendung und Niederschlag in strukturellen Merkmalen, Ausführungsformen und Weiterbildungen eines vorstehend erläuterten Traktionssystems gemäß dem zweiten Aspekt der Erfindung und umgekehrt.

Die oben erläuterten Merkmale, Aspekte und Vorteile der Erfindung werden nachfolgend unter Zuhilfenahme einer Ausführungsform der Erfindung in Zusammenhang mit mehreren Zeichnungen näher erläutert.

Es zeigen:
Figur 1 ein schematisiertes Schaltbild einer Ausführungsform eines Traktionssystems gemäß dem Stand der Technik,
Figur 2 ein schematisiertes Schaltbild einer Ausführungsform eines Traktionssystems gemäß der vorliegenden Erfindung,
Figur 3 ein schematisiertes Blockschaltbild einer möglichen Implementierung einer Regelungsstruktur zur Regelung des Traktionssystems gemäß Figur 2 in einem ersten Betriebszustand,
Figur 4 ein schematisiertes Blockschaltbild einer möglichen Implementierung einer Regelungsstruktur zur Regelung des Traktionssystems gemäß Figur 2 in einem zweiten Betriebszustand und
Figur 5 ein schematisiertes Blockschaltbild einer möglichen Implementierung einer Regelungsstruktur zur Regelung des Traktionssystems gemäß Figur 2 in einem dritten Betriebszustand.

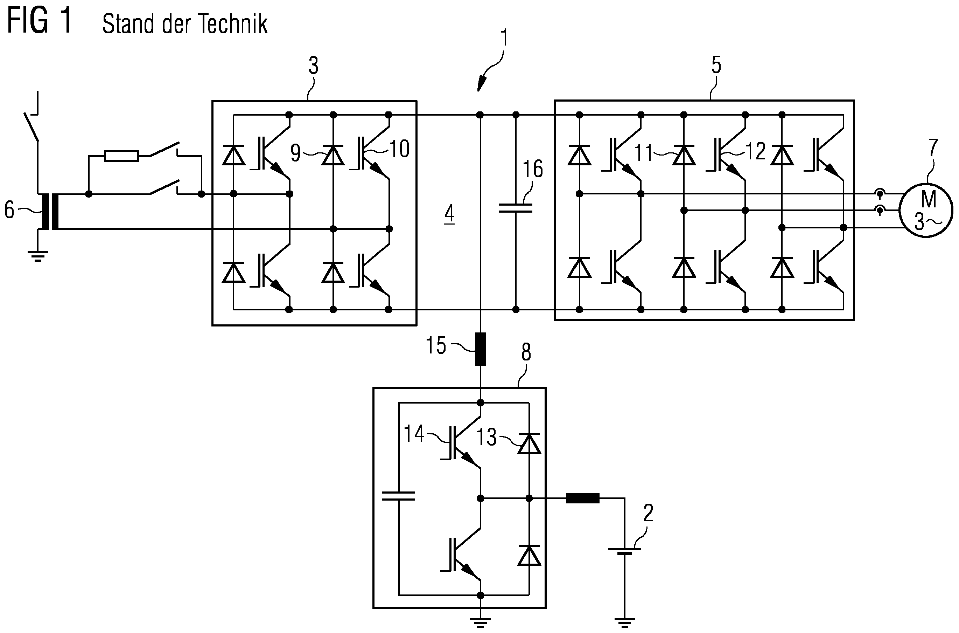

Figur 1 zeigt ein schematisiertes Schaltbild einer Ausführungsform eines Traktionssystems 1 gemäß dem Stand der Technik.

Das Traktionssystem 1 findet beispielsweise Anwendung in einem elektrischen Schienenfahrzeug. Das Traktionssystem 1 umfasst in der Ausführungsform gemäß Figur 1 eine Traktionsbatterie 2, die über einen Gleichstromsteller 8 an einen Zwischenkreis 4 des Traktionssystems 1 angebunden ist. Der Gleichstromsteller 8 weist in der Ausführungsform gemäß Figur 1 zwei Paare, jeweils umfassend eine Diode 13 und ein Schaltelement 14 auf, wobei die Traktionsbatterie 2 an einem Mittenabgriff (Stellerphase) der Verschaltung der Dioden 13 und der Schaltelemente 14 elektrisch an dem Gleichstromsteller 8 angebunden ist. Auf diese Weise arbeitet der Gleichstromsteller 8 als Tiefsetzsteller zum Laden der Traktionsbatterie 2 aus einer Zwischenkreisspannung im Zwischenkreis 4, die an einem Zwischenkreis-Kondensator 16 abfällt. Dem Zwischenkreis 4 und dem Gleichstromsteller 8 ist eine Drossel 15 zum Filtern von Oberschwingungen zwischengeschaltet.

Daneben weist das Traktionssystem 1 eine GleichrichterEinheit 3 und einen Traktionsumrichter 5 auf. Die Gleichrichter-Einheit 3 ist im Ausführungsbeispiel gemäß Figur 1 ein Vierquadrantensteller (4QS) mit vier Paaren, jeweils umfassend eine Diode 10 und ein Schaltelement 9. Die Gleichrichter-Einheit 3 ist demnach eingerichtet, beispielsweise eine über einen Transformator 6 gewandelte Netz-Wechselspannung, welche dem Transformator 6 mittels eines nicht dargestellten Stromabnehmers von einer Wechselstrom führenden Oberleitung eines Bahnstromnetzes zugeführt wird, in die Zwischenkreisspannung am Zwischenkreis 4 zu wandeln. Alternativ kann der Gleichrichter-Einheit 3 eine Netz-Gleichspannung, insbesondere unter Umgehung des Transformators 6, in die Zwischenkreisspannung wandeln, wenn das beispielhafte Schienenfahrzeug von einer Gleichstrom führenden Oberleitung eines Bahnstromnetzes versorgt wird. Durch aktives Schalten der Schaltelemente 10 in Zusammenspiel mit den Dioden 9 der Gleichrichter-Einheit 3 wird ein Einspeisestrom in den Zwischenkreis 4 vorgegeben zum Laden des Zwischenkreis-Kondensators 16 zum Aufbauen der Zwischenkreisspannung. Über die Zwischenkreisspannung am Zwischenkreis-Kondensator 16 kann mittels des Traktionsumrichters 5 elektrische Leistung aus dem Zwischenkreis 4 entnommen werden. Der Traktionsumrichter 5 ist im Ausführungsbeispiel gemäß Figur 1 als Pulswechselrichter (PWR) ausgeführt. Der Traktionsumrichter 5 ist hierbei als B6-Brückenschaltung umfassend sechs Paare jeweils mit einer Diode 11 und einem Schaltelement 12 eingerichtet. Durch aktives Ansteuern der Schaltelemente 12 in Zusammenspiel mit den Dioden 11 kann der Pulswechselrichter 5 eine gepulste Wechselspannung zum Antrieb einer daran angebundenen elektrischen Maschine 7 bereitstellen. Die elektrische Maschine 7 ist im Ausführungsbeispiel gemäß Figur 1 eine Drehstrommaschine. Die elektrische Maschine 7 ist beispielsweise eine Antriebsmaschine eines elektrischen Schienenfahrzeugs.

Das Traktionssystem 1 gemäß der Ausführungsform in Figur 1 ermöglicht einen hybriden Betrieb der elektrischen Maschine 7 aus einem Versorgungsnetz mittels Bereitstellens elektrischer Energie über die Gleichrichter-Einheit 3 in den Zwischenkreis 4 beziehungsweise aus der Traktionsbatterie 2 mittels Bereitstellens elektrischer Energie aus der Traktionsbatterie 2 mittels des Gleichstromstellers 8 in den Zwischenkreis 4. Daneben ist ein Betrieb des Traktionssystems 1 möglich, in dem die elektrische Maschine 7 aus dem Versorgungsnetz mittels der Gleichrichter-Einheit 3 betrieben wird, wobei die Traktionsbatterie 2 mit elektrischer Energie aus dem Zwischenkreis 4 durch Einstellen eines bestimmten Batteriestroms mittels des Gleichstromstellers 8 geladen wird. Die elektrische Energie zum Laden der Traktionsbatterie 2 wird mittels der Gleichrichter-Einheit 3 ebenfalls aus dem Versorgungsnetz in den Zwischenkreis 4 bereitgestellt.

Das Traktionssystem 1 gemäß der Ausführungsform aus Figur 1 hat den Nachteil, dass für einen Betrieb der Traktionsbatterie 2 innerhalb des Traktionssystems 1 Schaltverluste innerhalb des Gleichstromstellers 8 auftreten. Dadurch ist das Traktionssystem 1 verlustbehaftet. Ferner hat das Traktionssystem 1 gemäß Figur 1 den weiteren Nachteil, dass der Gleichstromsteller 8 Kosten verursacht und die Baugröße sowie das Gewicht der Hardware des Traktionssystems 1 negativ beeinflusst.

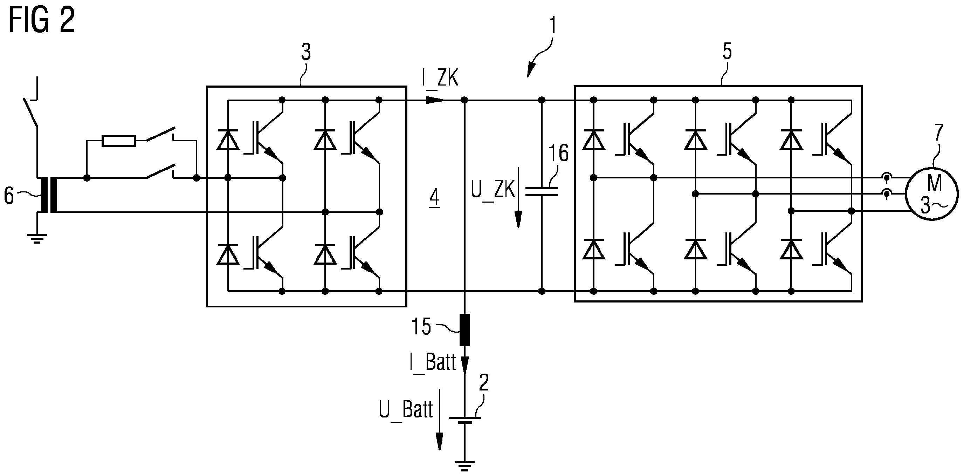

Figur 2 zeigt ein schematisiertes Schaltbild einer Ausführungsform eines Traktionssystems 1 gemäß der Erfindung. Das Traktionssystem 1 gemäß Figur 2 weist gegenüber dem Traktionssystem 1 gemäß Figur 1 diverse Vorteile auf. Strukturell entspricht das Traktionssystem 1 in der Ausführungsform gemäß Figur 2 im Wesentlichen dem Traktionssystem 1 in der Ausführungsform gemäß Figur 1, sodass auf die einzelnen Komponenten und deren Funktionalität Bezug zu Figur 1 genommen wird.

Im Unterschied zur Ausführungsform des Traktionssystems 1 gemäß Figur 1 ist die Traktionsbatterie 2 im Traktionssystem 1 gemäß der Ausführungsform aus Figur 2 jedoch ohne Zwischenschalten eines Gleichstromstellers 8 an den Zwischenkreis 4 angebunden. Lediglich eine Drossel 15 ist der Traktionsbatterie 2 und dem Zwischenkreis 4 in der Ausführungsform gemäß Figur 2 zwischengeschaltet. Das Traktionssystem 1 gemäß Figur 2 hat somit den Vorteil, dass der Gleichstromsteller 8 komplett entfällt. Auf diese Weise kann das Traktionssystem 1 in der Ausführungsform gemäß Figur 2 bezüglich seiner benötigten Hardware kostengünstiger, kompakter und leichter aufgebaut werden als das Traktionssystem 1 gemäß Figur 1.

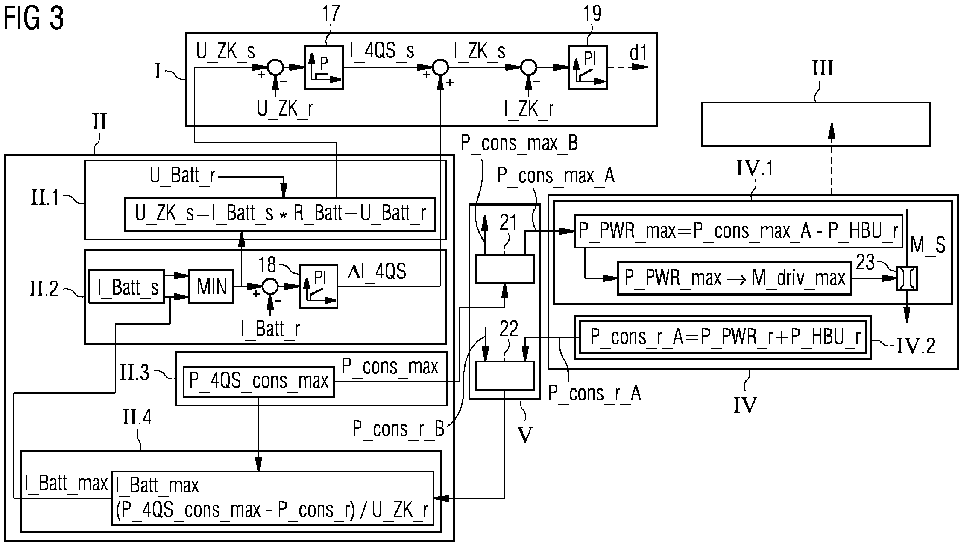

Das Traktionssystem 1 gemäß Figur 2 ermöglicht trotz Wegfallens des Gleichstromstellers 8 aus Figur 1 eine effiziente Regelung eines Batteriestroms I_Batt durch Vorgabe eines Einspeisestroms I_ZK in den Zwischenkreis 4 mittels einer Regelung der Zwischenkreisspannung U_ZK, die am Zwischenkreis-Kondensator 16 abfällt. Eine entsprechende Regelung wird für verschiedene Betriebsmodi des Traktionssystems 1 gemäß Figur 2 unter Zuhilfenahme der Figuren 3 bis 5 nachfolgend näher erläutert.

Figur 3 zeigt ein Blockschaltbild einer möglichen Implementierung einer Regelungsstruktur zur Regelung des Traktionssystems 1 gemäß Figur 2 in einem Antriebsbetrieb aus dem elektrischen Versorgungsnetz, zum Beispiel einer Oberleitung für ein Schienenfahrzeug.

Die Regelungsstruktur gemäß Figur 3 umfasst einen Signalprozessor I der Gleichrichter-Einheit 3 gemäß Figur 2, eine übergeordnete Steuerung II als zweite Steuerungskomponente der Gleichrichter-Einheit 3 gemäß Figur 2, einen Signalprozessor III des Traktionsumrichters 5 gemäß Figur 2, eine übergeordnete Steuerung IV als zweite Steuerungskomponente des Traktionsumrichters 5 gemäß Figur 2 sowie eine Fahrzeugsteuerung 5 als Traktionssystem-Steuerung des Traktionssystems 1 gemäß Figur 2.

Die einzelnen Funktionalitäten und das Zusammenspiel der Steuerungskomponenten I bis V gemäß Figur 3 werden nachfolgend näher erläutert.

Die Regelungsstruktur gemäß Figur 3 umfasst eine Zwischenkreis-Spannungsregelung mit unterlagerter Batterie-Stromregelung. Die Steuerungskomponente I weist hierzu einen Zwischenkreis-Spannungsregler 17 auf, der einen Spannungsistwert U_ZK_r der Zwischenkreisspannung U_ZK (vergleiche Figur 2) auf einen Spannungssollwert U_ZK_s der Zwischenkreisspannung U_ZK regelt. Hierzu ermittelt der Zwischenkreis-Spannungsregler 17 einen Regelfehler zwischen den Größen U_ZK_s und U_ZK_r und gibt an dessen Ausgang eine erste Sollgröße I_4QS_s für den Einspeisestrom I_ZK der Gleichrichter-Einheit 3 (siehe Figur 2) vor. Der Zwischenkreis-Spannungsregler 17 ist in der Implementierung gemäß Figur 3 ein P-Regler (Regler mit reinem Proportionalanteil). Alternativ kann der Zwischenkreis-Spannungsregler 17 zum Beispiel auch ein PI-Regler sein (Regler mit Proportional- und Integralanteil). Es kann jedoch je nach Regelungsaufgabe notwendig sein, den I-Anteil zu deaktivieren, wenn eine gemessene Spannungsabweichung zwischen den Größen U_ZK_r und U_ZK_s nicht zu Null geregelt werden kann. Ansonsten würde der Zwischenkreis-Spannungsregler 17 unter Umständen instabil und würde abdriften.

Der Ausgang des Zwischenkreis-Spannungsreglers 17 wird mit einem Ausgang eines Batterie-Stromreglers 18 innerhalb der zweiten Steuerungskomponente II beaufschlagt. In der Steuerungskomponente II findet die eigentliche Batteriestrom-Regelung statt.

In einem Steuerungskomplex II.1 wird eine Vorsteuerung des Zwischenkreis-Spannungsreglers 17 auf Basis eines Stromsollwertes I_Batt_s des Batteriestroms I_Batt dadurch vorgenommen, dass der Stromsollwert I_Batt_s des Batteriestroms I_Batt in eine Vorgabe-Berechnung des Spannungssollwertes U_ZK_s der Zwischenkreisspannung U_ZK einfließt. Konkret wird im Steuerungskomplex II.1 die Größe U_ZK_s berechnet, indem der Stromsollwert I_Batt_s mit einem Wert eines Innenwiderstands R_Batt der Traktionsbatterie 2 (siehe Figur 2) multipliziert wird und das Ergebnis mit dem Spannungsistwert U_Batt_r der Batteriespannung U_Batt (siehe Figur 2) addiert wird. Der Wert des Innenwiderstands R_Batt wird beispielsweise über eine Schätzung ermittelt. Die Größe U_Batt_r kann zum Beispiel über eine sogenannte State of Charge(SoC)-Kennlinie der Traktionsbatterie 2 ermittelt werden. Aus der SoC-Kennlinie kann ein entsprechender Spannungsistwert U_Batt_r ermittelt werden. Die im Steuerungskomplex II.1 ermittelte Größe U_ZK_s wird als vorgesteuerte Sollgröße dem Zwischenkreis-Spannungsregler 17 in der Steuerungskomponente I übergeben.

Im Steuerungskomplex II.2 erfolgt die Batteriestrom-Regelung über einen Batterie-Stromregler 18. Dieser erhält als Sollvorgabe einen Stromsollwert I_Batt_s des Batteriestroms I_Batt und regelt einen Stromistwert I_Batt_r auf den vorgegebenen Stromsollwert I_Batt_s.

Der Stromsollwert I_Batt_s wird aus Sicherheitsgründen auf einen maximal möglichen Strom I_Batt_max begrenzt. Hierzu ist dem Batterie-Stromregler 18 ein Auswahlbaustein MIN vorgeschaltet, der den kleineren Wert aus dem Stromsollwert I_Batt_s und dem maximalen Strom I_Batt_max als Stromsollwert für den Batterie-Stromregler 18 auswählt. Der Batterie-Stromregler 18 gibt an dessen Ausgang eine zweite Sollgröße AI_4QS für den Einspeisestrom I_ZK vor, wobei der Ausgang des Zwischenkreis-Spannungsreglers 17 mit dem Ausgang des Batterie-Stromreglers 18 beaufschlagt wird.

Auf diese Weise wird eine Vorgabegröße I_ZK_s aus den beiden Ausgangsgrößen I_4QS_s und ΔI_4QS der jeweiligen Regler 17 und 18 gebildet. Die Vorgabegröße I_ZK_s dient als Sollvorgabe für einen Zwischenkreis-Stromregler 19 in der Steuerungskomponente I, der den Stromistwert I_ZK_r des Einspeisestroms I_ZK auf die Vorgabegröße I_ZK_s regelt. Der Zwischenkreis-Stromregler 19 ist in der Implementierung gemäß Figur 3 zum Beispiel ein PI-Regler. Der Zwischenkreis-Stromregler 19 gibt an dessen Ausgang eine Steuergröße d1 aus. Die Steuergröße d1 gibt beispielsweise ein Schaltverhältnis als Ansteuergrad der Schaltmittel 10 der Gleichrichter-Einheit 3 (siehe Figur 2 in Verbindung mit Figur 1) vor. Auf diese Weise wird die Gleichrichter-Einheit 3 über die Steuergröße d1 derart angesteuert, dass mittels einer Zwischenkreis-Spannungsregelung über den Regler 17 und mittels einer Zwischenkreis-Stromregelung über den Regler 19 ein Einspeisestrom I_ZK vorgegeben wird und der Stromistwert I_ZK_r des Einspeisestroms I_ZK im Zwischenkreis 4 nachgestellt wird. Der entsprechend nachgestellte Stromistwert I_ZK_r berücksichtigt damit automatisch einen Anteil, der als Stromistwert I_Batt_r des Batteriestroms I_Batt zum Laden der Traktionsbatterie 2 aus dem Zwischenkreis (vergleiche Figur 2) in die Traktionsbatterie 2 eingespeist wird. Die Regelungsstruktur gemäß Figur 3 ermöglicht somit auf einfache Weise eine automatische Regelung des Batteriestroms I_Batt der Traktionsbatterie 2 mittels eines Einstellens eines vorgegebenen Einspeisestroms I_ZK innerhalb des Zwischenkreises 4 durch Stellen der Gleichrichter-Einheit 3 mittels einer kaskadierten Regelung über diverse Regler 17, 18 und 19.

Wie oben erläutert, wird der Stromsollwert I_Batt_s auf einen maximalen Batteriestrom I_Batt_max begrenzt. Der Grund hierfür besteht darin, dass die Gleichrichter-Einheit 3 nur eine begrenzte maximale Einspeiseleistung liefern kann. Ein Betrieb der Maschine 7 über das Traktionssystem 1 (siehe Figur 2) hat dabei generell immer Priorität vor einem Laden der Traktionsbatterie 2. Zum Laden der Traktionsbatterie 2 darf lediglich die restlich verfügbare Einspeiseleistung der Gleichrichter-Einheit 3 nach Abzug einer Traktions-Istleistung von der maximal möglichen Einspeiseleistung der Gleichrichter-Einheit 3 herangezogen werden. Folglich wird im Steuerungskomplex II.4 der maximale Batteriestrom I_Batt_max aus einer Differenz der maximalen Einspeiseleistung P_4QS_cons_max der Gleichrichter-Einheit 3 und der tatsächlich aus dem Zwischenkreis entnommenen Istleistung P_cons_r berechnet. P_cons_r beschreibt dabei die Istleistung, die über den Traktionsumrichter 5 zum Betrieb der Maschine 7 und über einen gesondert eingerichteten Hilfsbetriebeumrichter (HBU, nicht näher dargestellt) zum Betrieb von Hilfsaggregaten aus dem Zwischenkreis 4 entnommen wird. Die berechnete Differenz der entsprechenden Leistungen wird durch den Spannungsistwert U_ZK_r der Zwischenkreisspannung U_ZK dividiert. Auf diese Weise wird der situationsabhängig maximal mögliche Batteriestrom I_Batt_max als maximaler Stromsollwert des Batteriestroms I_Batt berechnet. Die maximale Einspeiseleistung P_4QS_cons_max der Gleichrichter-Einheit wird durch den Steuerungskomplex II.3 bereitgestellt.

Weitere Steuerungsaufgaben in der Implementierung gemäß Figur 3 sehen eine Momentenbegrenzung eines Sollmoments M_s auf ein maximales Antriebsmoment M_driv_max im Steuerungskomplex IV.1 vor. Hierzu wird eine maximale Entnahmeleistung P_PWR_max des Traktionsumrichters 5 aus einer Differenz der maximalen Einspeiseleistung P_cons_max_A der Gleichrichter-Einheit 3 und der aus dem Zwischenkreis entnommenen Istleistung P_HBU_r des Hilfsbetriebeumrichters ermittelt. Aus der Größe P_PWR_max wird sodann das maximale Antriebsmoment M_driv_max bestimmt und das vom Schienenfahrzeug vorgegebene Sollmoment M_s mittels eines Begrenzers 23 auf das Moment M_driv_max begrenzt.

Die im Steuerungskomplex IV.1 verarbeitete Größe P_cons_max_A wird aus der maximalen Einspeiseleistung P_4QS_cons_max im Steuerungskomplex II.3 ermittelt. Letztere Größe wird als Größe P_cons_max an eine Steuerungskomponente 21 innerhalb der Steuerung V übergeben. Die Steuerungskomponente 21 dient zur etwaigen Aufteilung der maximalen Einspeiseleistung P_4QS_cons_max der Gleichrichter-Einheit 3 auf mehrere Zwischenkreise, wobei die Größe P_4QS_consmax in zwei Teil-Leistungsgrößen P_cons_max_A und P_cons_max_B für zwei Zwischenkreise aufteilbar ist. Nachdem in der Ausführungsform gemäß Figur 2 lediglich ein Zwischenkreis 4 eingerichtet ist, wird die Größe P_4QS_cons_max unmittelbar als Größe P_cons_max_A im Steuerungskomplex IV.1 verarbeitet.

In einem Steuerungskomplex IV.2 erfolgt die Bestimmung einer Leistungsbilanz der momentan entnommenen Istleistung P_cons_r_A als Summe aus der entnommenen Istleistung P_PWR_r des Traktionsumrichters 5 und der entnommenen Istleistung P_HBU_r des Hilfsbetriebeumrichters.

Die im Steuerungskomplex IV.2 verarbeitete Größe P_cons_r_A wird als Istleistung P_cons_r innerhalb des Steuerungskomplexes II.4 verarbeitet. In der Steuerung V ist eine weitere Steuerungskomponente 22 zur Zusammenführung aller Teil-Istleistungen aus mehreren Zwischenkreisen eingerichtet. Hierbei werden insbesondere die Teil-Istleistungen P_cons_r_A und P_cons_r_B zur Gesamt-Istleistung P_cons_r zusammengeführt. Nachdem die Ausführungsform gemäß Figur 2 lediglich einen Zwischenkreis 4 aufweist, wird die Größe P_cons_r_A des Steuerungskomplexes IV.2 unmittelbar als Größe P_cons_r im Steuerungskomplex II.4 verarbeitet.

Schließlich sei bemerkt, dass in der Implementierung gemäß Figur 3 die Steuerungskomponenten III und IV des Traktionsumrichters 5 miteinander kommunizieren können, um die entsprechenden Steuerungsaufgaben durchzuführen. Dies ist durch einen gestrichelten Pfeil von der Steuerungskomponente IV in die Steuerungskomponente III angedeutet.

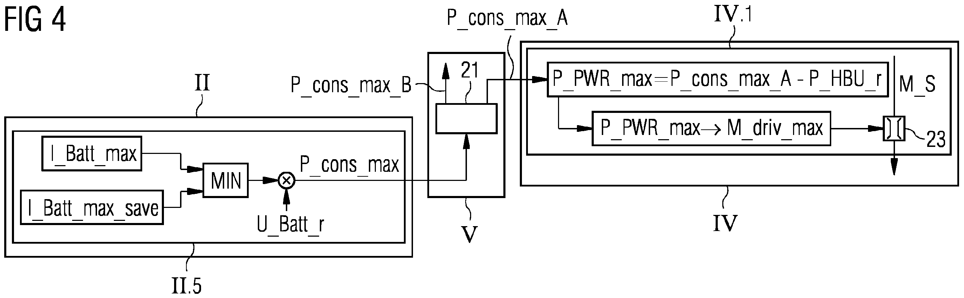

Figur 4 zeigt ein Blockschaltbild einer möglichen Implementierung einer Regelungsstruktur zur Regelung des Traktionssystems 1 gemäß Figur 2 in einem zweiten Betriebsmodus. Der zweite Betriebsmodus beschreibt hierbei einen Betrieb des Traktionssystems 1 rein aus der Traktionsbatterie 2, das heißt ohne Anbindung der Gleichrichter-Einheit 3 an ein elektrisches Versorgungsnetz (siehe Figur 2). Insofern beschreibt die Implementierung gemäß Figur 4 einen reinen Batteriebetrieb des Traktionsbetriebs 1, das heißt ein Austauschen von Leistung zwischen der Traktionsbatterie 2 und der über den Traktionsumrichter 5 angetriebenen Maschine 7.

Die Implementierung gemäß Figur 4 umfasst die Steuerungskomponenten II, IV und V. Im Steuerungskomplex II.5 erfolgt zunächst eine Auswahl eines maximalen Batteriestroms I_Batt_max beziehungsweise I_Batt_max_save über einen Auswahlblock MIN. Die Größe I_Batt_max stellt einen maximal möglichen Batteriestrom dar. Die Größe I_Batt_max_save stellt einen demgegenüber geringeren maximalen Batteriestrom dar. Dieser ergibt sich beispielsweise aus einem sogenannten Safety-Betrieb der Traktionsbatterie 2, indem ein niedrigerer maximaler Batteriestrom gewählt wird, um die Traktionsbatterie 2 nicht zu überlasten/zu schonen. Ein derartiger Betrieb kann sich beispielsweise daraus ergeben, dass einzelne Batteriezellen der Traktionsbatterie 2 beschädigt sind, was dem Steuerungssystem angezeigt werden kann. In diesem Fall wird ein reduzierter maximaler Batteriestrom I_Batt_max_save ausgewählt.

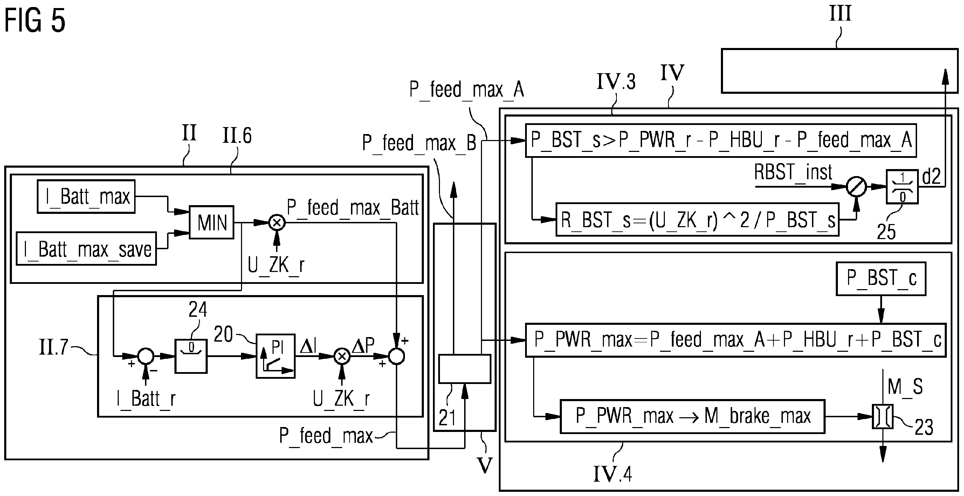

Der wie auch immer gewählte maximale Batteriestrom wird sodann in der Steuerungskomponente II mit dem Spannungsistwert U_Batt_r der Traktionsbatterie 2 multipliziert, um die maximale Einspeiseleistung P_cons_max der Traktionsbatterie 2 zu bestimmen. Die maximale Einspeiseleistung P_cons_max wird über die Steuerung V der Steuerungskomponente IV des Traktionsumrichters 5 übergeben. Im Steuerungskomplex IV.1 erfolgt dann gemäß der Funktionalität, wie sie zu Figur 3 erläutert worden ist, eine entsprechende Leistungs- beziehungsweise Momentenbegrenzung unter Zuhilfenahme der Größe P_cons_max_A, die in der Implementierung gemäß Figur 4 die maximale Einspeiseleistung P_cons_max der Traktionsbatterie 2 repräsentiert. Weiteren Erläuterungen bedarf es an dieser Stelle nicht. Aufgrund der Implementierung gemäß Figur 4 kann die elektrische Maschine 7 über Energie aus der Traktionsbatterie 2 betrieben werden. Figur 5 zeigt ein Blockschaltbild einer möglichen Implementierung einer Regelungsstruktur zur Regelung des Traktionssystems 1 gemäß Figur 2 in einem dritten Betriebsmodus. Der dritte Betriebsmodus kann alternativ ein Bremsbetrieb des Traktionssystems 1 gemäß Figur 2 mit oder ohne Anbindung an ein elektrisches Versorgungsnetz mittels der Gleichrichter-Einheit 3 sein. Je nachdem kann eine über die elektrische Maschine 7 und den Traktionsumrichter 5 in den Zwischenkreis 4 rückeingespeiste Leistung teilweise in die Traktionsbatterie 2 und teilweise in das elektrische Versorgungsnetz rückeingespeist werden oder (zumindest teilweise) in die Traktionsbatterie 2 rückeingespeist werden.

In der Implementierung gemäß Figur 5 sind diverse Sicherheitsvorkehrungen zur Begrenzung einer maximalen Rückeinspeiseleistung des Traktionsumrichters 5 vorgesehen.

Zunächst wird in einem Steuerungskomplex II.6 aus einem maximalen Batteriestromwert I_Batt_max beziehungsweise I_Batt_max_save des Batteriestroms I_Batt (vergleiche Erläuterungen zu II.5 in Figur 4) und dem Spannungsistwert U_ZK_r der Zwischenkreisspannung U_ZK eine maximale Einspeiseleistung P_feed_max_Batt in die Traktionsbatterie 2 berechnet. Letztere Größe wird als Größe P_feed_max mittels der Steuerung V (genauer über die Steuerungskomponente 21) als Größe P_feed_max_A einem Steuerungskomplex IV.3 übergeben. Hierin wird eine Sollleistung P_BST_s eines im Traktionssystem 1 eingerichteten Bremsstellers (BST, nicht näher dargestellt) berechnet. Die Sollleistung P_BST_s soll dabei größer sein als eine Leistung, die sich aus einem Abzug der Istleistung des Hilfsbetriebeumrichters P_HBU_r und der maximalen Einspeiseleistung P_feed_max_A in die Traktionsbatterie 2 von der rückeingespeisten Istleistung P_PWR_r des Traktionsumrichters 5 ergibt. Die Sollleistung P_BST_s wird dadurch derart dimensioniert, dass ein Überschussleistungsanteil der in den Zwischenkreis 4 rückeingespeisten Leistung, welcher nicht durch die Traktionsbatterie 2 oder den Hilfsbetriebeumrichter verbraucht wird, durch den Bremssteller abgeleitet wird.

Aus der Leistungsgröße P_BST_s wird in dem Steuerungskomplex IV.3 zudem ein einstellbarer Bremswiderstand R_BST_s als Sollwiderstand des Bremsstellers berechnet. Dieser Sollwiderstand wird aus einem Verhältnis (U_ZK_r)²/P_BST_s bestimmt. Aus einem Verhältnis des Bremswiderstandes R_BST_s zu einem vorgegebenen Bremswiderstand RBST_Inst wird unter Zuhilfenahme eines Begrenzers 25 eine Steuergröße d2 bestimmt. Die Steuergröße d2 repräsentiert ein Ansteuerverhältnis für Schaltmittel zum Steuern des Bremsstellers BST zum Einstellen des bestimmten Sollwiderstandes R_BST_s. Die Steuergröße d2 wird der Steuerungskomponente III übergeben. Auf diese Weise kann durch den Steuerungskomplex IV.3 ein Bremssteller im Traktionssystem 1 eingestellt werden, der mit dem Zwischenkreis 4 verschaltet ist, um überschüssige rückeingespeiste Leistung aus dem Traktionsumrichter 5 abzuleiten, sodass ein Schaden des Traktionssystems 1 verhindert wird. Insbesondere kann im Steuerungskomplex IV.3 auf Basis einer Leistungsbilanz der Bremssteller derart vorgesteuert werden, dass bei schnellen Bremsmomentanstiegen in der Antriebsmaschine 7 (siehe Figur 2) auch kurzzeitig keine zu hohen Einspeiseströme aus dem Zwischenkreis 4 in die Traktionsbatterie 2 fließen.

Im Steuerungskomplex IV.4 wird zudem die maximale Rückeinspeiseleistung P_PWR_max des Traktionsumrichters 5 berechnet als eine Summe der maximalen Einspeiseleistung P_feed_max_A der Traktionsbatterie 2 (übergeben durch die Komponente 21 als Größe P_feed_max der Steuerungskomponente II), der entnommenen Istleistung P_HBU_r des Hilfsbetriebeumrichters und einer Kannleistung P_BST_c des Bremsstellers. Die Größe P_PWR_max wird somit aus einer Leistungsbilanz der beteiligten Komponenten ermittelt und stellt die maximal erlaubte Rückeinspeiseleistung des Traktionsumrichters 5 dar. Aus der Größe P_PWR_max wird sodann ein maximales Bremsmoment M_brake max der Antriebsmaschine 7 berechnet. Ein Sollmoment M_s der Maschine 7 wird mittels des Begrenzers 23 auf das maximale Bremsmoment M_brake_max begrenzt. Auf diese Weise wird im Steuerungskomplex IV.4 das maximale Bremsmoment M_brake_max auf die maximal erlaubte Rückeinspeiseleistung des Traktionsumrichters 5 begrenzt, sodass keine zu hohen Ströme zurück in den Zwischenkreis 4 und damit in die Traktionsbatterie 2 fließen.

Als weitere zusätzliche oder alternative Sicherheitsmaßnahme, um die Traktionsbatterie 2 vor zu hohen Strömen zu schützen, wird im Steuerungskomplex II.7 die maximale erlaubte Einspeiseleistung P_feed_max_Batt in die Traktionsbatterie 2 durch einen Batterie-Überstromschutz-Regler 20 begrenzt, wenn der gemessene Batteriestrom I_Batt_r (Stromistwert) den maximal erlaubten Ladestrom I_Batt_max (vergleiche II.6) übersteigt. Dem Regler 20 ist hierbei ein Begrenzer 24 vorgeschaltet, der lediglich durchschaltet, wenn die Differenz aus I_Batt_max (gewonnen aus II.6) und I_Batt_r negativ wird. In diesem Fall regelt der, beispielhaft als PI-Regler ausgeführte, Regler 20 den gemessenen Batteriestrom I_Batt_r und gibt eine Differenzgröße ΔI (negativer Wert) an dessen Ausgang aus. Die Differenzgröße ΔI wird dann mit dem Spannungsistwert U_ZK_r der Zwischenkreisspannung U_ZK zu einer Differenzleistung ΔP multipliziert. Die Differenzleistung ΔP weist in diesem Fall einen negativen Wert auf. Durch Beaufschlagung der negativen Differenzleistung ΔP auf die maximale Einspeiseleistung P_feed_max_Batt wird letztere somit weiter reduziert und als reduzierte maximale Einspeiseleistung P_feed_max mittels der Steuerung V an die Steuerungskomponente IV übergeben.

Die Regelungsstruktur im Steuerungskomplex II.7 ermöglicht somit eine dynamische Nachregelung der maximalen Einspeiseleistung P_feed_max_Batt zur dynamischen Anpassung der Steuergrößen innerhalb der Steuerungskomponente IV. Somit wird eine dynamische Überstrom-Schutzregelung für die Absicherung der Traktionsbatterie 2 gewährleistet. Eine derartige Regelung kann z.B. dann vorteilhaft sein, wenn die weiteren erläuterten Sicherheitsmaßnahmen, z.B. die Funktionalität des Bremsstellers oder eine Begrenzung der maximalen Rückeinspeiseleistung P_PWR_max des Traktionsumrichters 5, versagen oder unzureichend sind. Z.B. kann die Dimensionierung des Bremsstellers über den berechneten Widerstand R_BST_s unzureichend sein, weil der Widerstand R_BST_s temperaturabhängig schwanken kann oder generell nur ungenau ermittelbar ist.

Falls die Implementierung gemäß Figur 5 unter reiner Anbindung der Traktionsbatterie 2 an den Zwischenkreis 4 ohne Anbindung des Traktionssystems 1 mittels der GleichrichterEinheit 3 an ein Versorgungsnetz eingesetzt wird, verhindert die erläuterte Überstrom-Schutzregelung somit einen Schaden oder eine Zerstörung der Traktionsbatterie 2. Falls die Implementierung gemäß Figur 5 unter Anbindung der Traktionsbatterie 2 an den Zwischenkreis 4 mit kombinierter Anbindung des Traktionssystems 1 mittels der GleichrichterEinheit 3 an ein Versorgungsnetz eingesetzt wird, erlaubt die erläuterte Implementierung der diversen Regelungsstrukturen (vgl. Fig. 3 und 5) ein Rückeinspeisen einer Teilleistung der vom Traktionsumrichter 5 in den Zwischenkreis 4 rückeingespeisten Leistung in das Versorgungsnetz, soweit die rückeingespeiste Leistung weder von der Traktionsbatterie 2, dem Hilfsbetriebeumrichter oder dem Bremssteller kompensiert wird bzw. kompensiert werden kann.

Die dargestellten Ausführungsformen und Implementierungen sind lediglich beispielhaft gewählt. Die hierin erläuterte Erfindung ist nicht auf die dargestellten Ausführungsformen und Implementierungen beschränkt, sondern alleine durch den Inhalt der beigefügten Patentansprüche.

Die erläuterte Erfindung ermöglicht eine direkte Anbindung einer Traktionsbatterie 2 an einen Zwischenkreis 4 eines Traktionssystems 1 ohne Zwischenschalten eines Gleichstromstellers. Durch Einrichten der erläuterten Regelungsstruktur(en) kann ein separater Gleichstromsteller für die Traktionsbatterie 2 vollständig weggelassen werden. Auf diese Weise ist ein kostengünstiges, kompaktes und leichteres Traktionssystem 1 realisierbar. Ferner werden Schaltverluste innerhalb eines separaten Gleichstromstellers vermieden. Das Traktionssystem 1 erlaubt dennoch eine zuverlässige, dynamische und sichere Regelung sämtlicher Komponenten des Traktionssystems 1.

## Patentansprüche

1. Verfahren zur Regelung eines Batteriestroms (I_Batt) einer Traktionsbatterie (2) eines Traktionssystems (1), **dadurch gekennzeichnet, dass**
- eine Gleichrichter-Einheit (3) des Traktionssystems (1) eine Netzspannung mittels eines vorgebbaren Einspeisestroms (I_ZK) in eine regelbare Zwischenkreisspannung (U_ZK) eines Zwischenkreises (4) des Traktionssystems (1) wandelt,
- ein Zwischenkreis-Spannungsregler (17) einen Spannungsistwert (U_ZK_r) der Zwischenkreisspannung (U_ZK) auf einen Spannungssollwert (U_ZK_s) der Zwischenkreisspannung (U_ZK) regelt und eine erste Ausgangsgröße vorgibt,
- ein Batterie-Stromregler (18) einen Stromistwert (I_Batt_r) des Batteriestroms (I_Batt) auf einen Stromsollwert (I_Batt_s) des Batteriestroms (I_Batt) regelt und eine zweite Ausgangsgröße vorgibt,
- die erste Ausgangsgröße des Zwischenkreis-Spannungsreglers (17) mit der zweiten Ausgangsgröße des Batterie-Stromreglers (18) zur Bildung einer Vorgabegröße (I_ZK_s) für den Einspeisestrom (I_ZK) beaufschlagt wird, und
- mittels des anhand der Vorgabegröße (I_ZK_s) vorgegebenen Einspeisestroms (I_ZK) der Stromistwert (I_Batt_r) des Batteriestroms (I_Batt) zu dessen Regelung nachgestellt wird.

2. Verfahren nach Anspruch 1,
**dadurch gekennzeichnet, dass**
die Traktionsbatterie (2) direkt an den Zwischenkreis (4) des Traktionssystems (1) angebunden ist und von dem Batteriestrom (I_Batt) gespeist wird.

3. Verfahren nach Anspruch 1 oder 2,
**dadurch gekennzeichnet, dass**
- die erste Ausgangsgröße des Zwischenkreis-Spannungsreglers (17) eine erste Sollgröße (I_4QS_s) für den Einspeisestrom (I_ZK) vorgibt und die zweite Ausgangsgröße des Batterie-Stromreglers (18) eine zweite Sollgröße (ΔI_4QS) für den Einspeisestrom (I_ZK) vorgibt,
- die Vorgabegröße (I_ZK_s) aus einer Summe der ersten und zweiten Sollgröße (I_4QS_s, ΔI_4QS) für den Einspeisestrom (I_ZK) gebildet wird, und
- ein Zwischenkreis-Stromregler (19) einen Stromistwert (I_ZK_r) des Einspeisestroms (I_ZK) auf die Vorgabegröße (I_ZK_s) regelt und eine Steuergröße (d1) vorgibt, wobei die Gleichrichter-Einheit (3) über die Steuergröße (d1) zum Nachstellen des Stromistwertes (I_ZK_r) des Einspeisestroms (I_ZK) angesteuert wird.

4. Verfahren nach einem der Ansprüche 1 bis 3,
**dadurch gekennzeichnet, dass**
der Zwischenkreis-Spannungsregler (17) auf Basis des Stromsollwertes (I_Batt_s) des Batteriestroms (I_Batt) dadurch vorgesteuert wird, dass der Stromsollwert (I_Batt_s) des Batteriestroms (I_Batt) in eine Vorgabe-Berechnung des Spannungssollwertes (U_ZK_s) der Zwischenkreisspannung (U_ZK) einfließt.

5. Verfahren nach einem der Ansprüche 1 bis 4,
**dadurch gekennzeichnet, dass**
in einem Antriebsbetrieb des Traktionssystems (1) über eine Einspeiseleistung aus der Gleichrichter-Einheit (3) eine Differenz aus einer maximalen Einspeiseleistung (P_4QS_cons_max) der Gleichrichter-Einheit (3) in den Zwischenkreis (4) und einer aus dem Zwischenkreis (4) entnommenen Istleistung (P_cons_r) eines Traktionsumrichters (5) des Traktionssystems (1) bestimmt wird, und aus der Differenz ein maximaler Batteriestromwert (I_Batt_max) des Batteriestroms (I_Batt) berechnet wird.

6. Verfahren nach einem der Ansprüche 1 bis 5,
**dadurch gekennzeichnet, dass**
- in einem Bremsbetrieb des Traktionssystems (1) aus einem maximalen Batteriestromwert (I_Batt_max) des Batteriestroms (I_Batt) und dem Spannungsistwert (U_ZK_r) der Zwischenkreisspannung (U_ZK) eine maximale Einspeiseleistung (P_feed_max_Batt) in die Traktionsbatterie (2) berechnet wird, und
- eine maximale Rückeinspeiseleistung (P_PWR_max) des Traktionsumrichters (5) in den Zwischenkreis (4) unter Berücksichtigung der maximalen Einspeiseleistung (P_feed_max_Batt) in die Traktionsbatterie (2) berechnet wird,
wobei die maximale Rückeinspeiseleistung (P_PWR_max) des Traktionsumrichters (5) in den Zwischenkreis (4) in ein maximales Bremsmoment (M_brake _max) einer mittels des Traktionsumrichters (5) betriebenen Antriebsmaschine (7) umgerechnet wird.

7. Verfahren nach Anspruch 6,
**dadurch gekennzeichnet, dass**
- ein Batterie-Überstromschutz-Regler (20) den Stromistwert (I_Batt_r) des Batteriestroms (I_Batt) auf den maximalen Batteriestromwert (I_Batt_max) des Batteriestroms (I_Batt) regelt und eine Differenzgröße (ΔI) für den Batteriestrom (I_Batt) vorgibt,
- aus der Differenzgröße (ΔI) für den Batteriestrom (I_Batt) und dem Spannungsistwert (U_ZK_r) der Zwischenkreisspannung (U_ZK) eine Differenzleistung (ΔP) berechnet wird, und
- die maximale Einspeiseleistung (P_feed_max_Batt) in die Traktionsbatterie (2) um die Differenzleistung (ΔP) reduziert wird.

8. Traktionssystem (1), aufweisend eine Traktionsbatterie (2), eine Gleichrichter-Einheit (3) und einen Zwischenkreis (4),
**dadurch gekennzeichnet, dass**
die Gleichrichter-Einheit (3) eingerichtet ist, eine Netzspannung mittels eines vorgebbaren Einspeisestroms (I_ZK) in eine regelbare Zwischenkreisspannung (U_ZK) des Zwischenkreises (4) zu wandeln, wobei die Traktionsbatterie (2) an den Zwischenkreis (4) angebunden ist, und
das Traktionssystem (1) weiter aufweist:
- einen Zwischenkreis-Spannungsregler (17), der für eine Regelung eines Spannungsistwertes (U_ZK_r) der Zwischenkreisspannung (U_ZK) auf einen Spannungssollwert (U_ZK_s) der Zwischenkreisspannung (U_ZK) implementiert ist, wobei durch den Zwischenkreis-Spannungsregler (17) eine erste Ausgangsgröße vorgebbar ist, und
- einen Batterie-Stromregler (18), der für eine Regelung eines Stromistwertes (I_Batt_r) eines Batteriestroms (I_Batt) der Traktionsbatterie (2) auf einen Stromsollwert (I_Batt_s) des Batteriestroms (I_Batt) der Traktionsbatterie (2) implementiert ist, wobei durch den Batterie-Stromregler (18) eine zweite Ausgangsgröße vorgebbar ist, wobei ein Ausgang des Zwischenkreis-Spannungsreglers (17) und ein Ausgang des Batterie-Stromreglers (18) verbunden sind, wodurch die erste Ausgangsgröße des Zwischenkreis-Spannungsreglers (17) mit der zweiten Ausgangsgröße des Batterie-Stromreglers (18) zur Bildung einer Vorgabegröße (I_ZK_s) für den Einspeisestrom (I_ZK) beaufschlagbar ist, sodass mittels des anhand der Vorgabegröße (I_ZK_s) vorgebbaren Einspeisestroms (I_ZK) der Stromistwert (I_Batt_r) des Batteriestroms (I_Batt) zu dessen Regelung nachstellbar ist.

9. Traktionssystem (1) nach Anspruch 8,
**dadurch gekennzeichnet, dass**
die Traktionsbatterie (2) ohne Zwischenschalten eines Gleichstromstellers (8) an den Zwischenkreis (4) des Traktionssystems (1) angebunden ist.

10. Traktionssystem (1) nach Anspruch 8 oder 9,
**dadurch gekennzeichnet, dass**
- durch die erste Ausgangsgröße des Zwischenkreis-Spannungsreglers (17) eine erste Sollgröße (I_4QS_s) für den Einspeisestrom (I_ZK) vorgebbar ist und durch die zweite Ausgangsgröße des Batterie-Stromreglers (18) eine zweite Sollgröße (ΔI-4QS) für den Einspeisestrom (I_ZK) vorgebbar ist,
- die Vorgabegröße (I_ZK_s) eine Summe aus der ersten und zweiten Sollgröße (I_4QS_s, ΔI_4QS) für den Einspeisestrom (I_ZK) ist, und
- das Traktionssystem (1) ferner einen Zwischenkreis-Stromregler (19) aufweist, der für eine Regelung eines Stromistwertes (I_ZK_r) des Einspeisestroms (I_ZK) auf die Vorgabegröße (I_ZK_s) implementiert ist, wobei durch den Zwischenkreis-Stromregler (19) eine Steuergröße (d1) vorgebbar ist, über die die Gleichrichter-Einheit (3) zum Nachstellen des Stromistwertes (I_ZK_r) des Einspeisestroms (I_ZK) ansteuerbar ist.

11. Traktionssystem (1) nach einem der Ansprüche 8 bis 10, **dadurch gekennzeichnet, dass**
- der Zwischenkreis-Spannungsregler (17) innerhalb einer ersten Steuerungskomponente (I) der Gleichrichter-Einheit (3) implementiert ist, und
- der Batterie-Stromregler (18) innerhalb einer zweiten Steuerungskomponente (II) der Gleichrichter-Einheit (3) implementiert ist.

12. Traktionssystem (1) nach Anspruch 11,
**dadurch gekennzeichnet, dass**
das Traktionssystem (1) ferner aufweist:
- einen Traktionsumrichter (5),
- eine Steuerungskomponente (IV) des Traktionsumrichters (5) und
- eine Traktionssystem-Steuerung (V),
wobei die Steuerungskomponente (IV) des Traktionsumrichters (5) mittels der Traktionssystem-Steuerung (V) an die zweite Steuerungskomponente (II) der Gleichrichter-Einheit (3) angebunden ist.

13. Traktionssystem (1) nach einem der Ansprüche 8 bis 12,
**dadurch gekennzeichnet, dass**
das Traktionssystem (1) ferner einen Batterie-Überstromschutz-Regler (20) aufweist, der für eine Regelung des Stromistwertes (I_Batt_r) des Batteriestroms (I_Batt) auf einen maximalen Batteriestromwert (I_Batt_max) des Batteriestroms (I_Batt) implementiert ist, wobei an einem Ausgang des Batterie-Überstromschutz-Reglers (20) eine Differenzgröße (ΔI) für den Batteriestrom (I_Batt) vorgebbar ist, und wobei der Ausgang des Batterie-Überstromschutz-Reglers (20) mit dem Spannungsistwert (U_ZK_r) der Zwischenkreisspannung (U_ZK) beaufschlagbar ist, wodurch einer Differenzleistung (ΔP) ermittelbar ist zur Reduktion einer maximalen Einspeiseleistung (P_feed_max_Batt) in die Traktionsbatterie (2) um die Differenzleistung (ΔP).

14. Traktionssystem (1) nach einem der Ansprüche 8 bis 13,
**dadurch gekennzeichnet, dass**
das Traktionssystem (1) eingerichtet ist, ein Verfahren nach einem der Ansprüche 1 bis 7 durchzuführen.

15. Schienenfahrzeug, **gekennzeichnet durch** ein Traktionssystem (1) nach einem der Ansprüche 8 bis 14.

## Claims

1. Method for controlling a battery current (I_Batt) of a traction battery (2) of a traction system (1),
**characterised in that**
- a rectifier unit (3) of the traction system (1) converts a mains voltage by means of a predeterminable feed-in current (I_ZK) into a controllable intermediate circuit voltage (U_ZK) of an intermediate circuit (4) of the traction system (1),
- an intermediate circuit voltage controller (17) controls an actual voltage value (U_ZR_r) of the intermediate circuit voltage (U_ZK) to a target voltage value (U_ZK_s) of the intermediate circuit voltage (U_ZK) and predetermines a first output variable,
- a battery current controller (18) controls a target current value (I_Batt_r) of the battery current (I_Batt) to a target current value (I_Batt_s) of the battery current (I_Batt) and predetermines a second output variable,
- the first output variable of the intermediate circuit voltage controller (17) is applied with the second output variable of the battery current controller (18) in order to form a default variable (I_ZK_s) for the feed-in current (I_ZK), and
- by means of the feed-in current (I_ZK) predetermined on the basis of the default variable (I_ZK_s), the actual current value (I_Batt_r) of the battery current (I_Batt) is readjusted for its control.

2. Method according to claim 1,
**characterised in that**
the traction battery (2) is bound directly to the intermediate circuit (4) of the traction system (1) and is fed by the battery current (I_Batt).

3. Method according to claim 1 or 2,
**characterised in that**
- the first output variable of the intermediate circuit voltage controller (17) predetermines a first target variable (I_4QS_s) for the feed-in current (I_ZK) and the second output variable of the battery current controller (18) predetermines a second target variable (ΔI_4QS) for the feed-in current (I_ZK),
- the default variable (I_ZK_s) is formed from a total of the first and second target variable (I_4QS_s, ΔI_4QS) for the feed-in current (I_ZK), and
- an intermediate circuit current controller (19) controls an actual target value (I_ZK_r) of the feed-in current (I_ZK) to the default variable (I_ZK_s) and predetermines a control variable (d1), wherein the rectifier unit (3) is controlled by way of the control variable (d1) in order to readjust the actual current value (I_ZK_r) of the feed-in current (I_ZK).

4. Method according to one of claims 1 to 3,
**characterised in that**
the intermediate circuit voltage controller (17) is precontrolled on the basis of the target current value (I_Batt_s) of the battery current (I_Batt) so that the target current value (I_Batt_s) of the battery current (I_Batt) flows into a default calculation of the voltage target value (U_ZK_s) of the intermediate circuit voltage (U_ZK).

5. Method according to one of claims 1 to 4,
**characterised in that**
during drive operation of the traction system (1) by way of a feed-in power from the rectifier unit (3), a difference is determined from a maximum feed-in power (P_4QS_con_max) of the rectifier unit (3) into the intermediate circuit (4) and an actual power (P_cons_r) of a traction converter (5) of the traction system (1) taken from the intermediate circuit (4), and a maximum battery current value (I_Batt_max) of the battery current (I_Batt) is calculated from the difference.

6. Method according to one of claims 1 to 5,
**characterised in that**
- during braking operation of the traction system (1) a maximum feed-in power (P_feedmax_Batt) into the traction battery (2) is calculated from a maximum battery current value (I_Batt_max) of the battery current (I_Batt) and the actual voltage value (U_ZK_r) of the intermediate circuit voltage (U_ZK), and
- a maximum return feed-in power (P_PWR_max) of the traction converter (5) into the intermediate circuit (4) is calculated by taking into account the maximum feed-in power (P_feed_max_Batt) into the traction battery (2),
- wherein the maximum return feed-in power (P_PWR_max) of the traction converter (5) into the intermediate circuit (4) is converted into a maximum brake torque (M_brake_max) of a drive machine (7) operated by means of the traction converter (5).

7. Method according to claim 6,
**characterised in that**
- a battery overcurrent controller (20) controls the actual current value (I_Batt_r) of the battery current (I_Batt) to the maximum battery current value (I_Batt_max) of the battery current (I_Batt) and predetermines a differential variable (ΔI) for the battery current (I_Batt),
- a differential power (ΔP) is calculated from the differential variable (ΔI) for the battery current (I_Batt) and the actual voltage value (U_ZK_r) of the intermediate circuit voltage (U_ZK), and
- the maximum feed-in power (P_feed_max_Batt) into the traction battery (2) is reduced by the differential power (ΔP) .

8. Traction system (1), having a traction battery (2), a rectifier unit (3) and an intermediate circuit (4),
**characterised in that**
the rectifier unit (3) is designed to convert a mains voltage by means of a predeterminable feed-in current (I_ZK) into a controllable intermediate circuit voltage (U_ZK) of the intermediate circuit (4), wherein the traction battery (2) is bound to the intermediate circuit (4), and the traction system (1) further has:
- an intermediate circuit voltage controller (17), which, for a control of an actual voltage value (U_ZK_r) of the intermediate circuit voltage (U_ZK), is implemented on a target voltage value (U_ZK_s) of the intermediate circuit voltage (U_ZK), wherein a first output variable can be predetermined by the intermediate circuit voltage controller (17), and
- a battery current controller (18), which, for a control of an actual current value (I_Batt_r) of a battery current (I_Batt) of the traction battery (2), is implemented on a target current value (I_Batt_s) of the battery current (I_Batt) of the traction battery (2), wherein a second output variable can be predetermined by the battery current controller (18), wherein an output of the intermediate circuit voltage controller (17) and an output of the battery current controller (18) are connected, as a result of which the first output variable of the intermediate circuit voltage controller (17) can be applied with the second output variable of the battery current controller (18) in order to form a default variable (I_ZK_s) for the feed-in current (I_ZK), so that the actual current value (I_Batt_r) of the battery current (I_Batt) can be readjusted for its control by means of the feed-in current (I_ZK) which can be predetermined on the basis of the default variable (I_ZK_s).

9. Traction system (1) according to claim 8,
**characterised in that**
the traction battery (2) is bound to the intermediate circuit (4) of the traction system (1) without interconnection of a d.c. power controller (8).

10. Traction system (1) according to claim 8 or 9,
**characterised in that**
- a first target variable (I_4QS_s) can be predetermined for the feed-in current (I_ZK) by the first output variable of the intermediate circuit voltage controller (17) and a second target variable (ΔI_4QS) for the feed-in current (I_ZK) can be predetermined by the second output variable of the battery current controller (18),
- the default variable (I_ZK_s) is a total of the first and second target variable (I_4QS_s, ΔI_4QS) for the feed-in current (I_ZK), and
- the traction system (1) further has an intermediate circuit current controller (19), which, for control of an actual current value (I_ZK_r) of the feed-in current (I_ZK), is implemented on the default variable (I_ZK_s), wherein a control variable (d1) can be predetermined by the intermediate circuit current controller (19), by way of which the rectifier unit (3) can be controlled in order to readjust the actual current value (I_ZK_r) of the feed-in current (I_ZK).

11. Traction system (1) according to one of claims 8 to 10,
**characterised in that**
- the intermediate circuit voltage controller (17) is implemented within a first control component (I) of the rectifier unit (3), and
- the battery current controller (18) is implemented within a second control component (II) of the rectifier unit (3) .

12. Traction system (1) according to claim 11,
**characterised in that**
the traction system (1) further has
- a traction converter (5),
- a control component (IV) of the traction converter (5) and
- a traction system controller (V),
- wherein the control component (IV) of the traction converter (5) is bound to the second control component (II) of the rectifier unit (3) by means of the traction system controller (V).

13. Traction system (1) according to one of claims 8 to 12,
**characterised in that**
the traction system (1) further has a battery overcurrent protection controller (20), which for control of the actual current value (I_Batt_r) of the battery current (I_Batt), is implemented on a maximum battery current value (I_Batt_max) of the battery current (I_Batt), wherein a differential variable (ΔI) can be predetermined for the battery current (I_Batt) at an output of the battery overcurrent protection controller (20), and wherein the output of the battery overcurrent protection controller (20) can be applied with the actual voltage value (U_ZK_r) of the intermediate circuit voltage (U_ZK), as a result of which a differential power (ΔP) can be determined in order to reduce a maximum feed-in power (P_feed_max_Batt) into the traction battery (2) by the differential power (ΔP).

14. Traction system (1) according to one of claims 8 to 13,
**characterised in that**
the traction system (1) is designed to carry out a method according to one of claims 1 to 7.

15. Rail vehicle, **characterised by** a traction system (1) according to one of claims 8 to 14.

## Revendications

1. Procédé de régulation d'un courant (I_Batt) de la batterie d'une batterie (2) de traction d'un système (1) de traction, **caractérisé en ce que**
- une unité (3) de redresseur du système (1) de traction transforme une tension de réseau au moyen d'un courant (I_ZK) d'injection pouvant être donné à l'avance en une tension (U_ZK) réglable d'un circuit (4) intermédiaire du système (1) de traction,
- un régulateur (17) de tension de circuit intermédiaire régule une valeur (U_ZK_r) réelle de la tension (U_ZK) du circuit intermédiaire à une valeur (U_ZK_s) de consigne de la tension (U_ZK) du circuit intermédiaire et prescrit une première grandeur de sortie,
- un régulateur (18) de courant de la batterie régule une valeur (I_Batt_r) réelle du courant (I_Batt) de la batterie à une valeur (I_Batt_s) de consigne du courant (I_Batt) de la batterie et prescrit une deuxième grandeur de sortie,
- on applique la première grandeur de sortie du régulateur (17) de tension du circuit intermédiaire avec la deuxième grandeur de sortie du régulateur (18) du courant de la batterie pour la formation d'une grandeur (I_ZK_s) de prescription du courant (I_ZK) d'injection et
- au moyen du courant (I_ZK) d'injection donné à l'avance à l'aide de la grandeur (I_ZK_s) de prescription, on règle la valeur (I_Batt_r) réelle du courant (I_Batt) de la batterie pour sa régulation.

2. Procédé suivant la revendication 1,
**caractérisé en ce que**
la batterie (2) de traction est reliée directement au circuit (4) intermédiaire du système (1) de traction et est alimentée par le courant (I_Batt) de la batterie.

3. Procédé suivant la revendication 1 ou 2,
**caractérisé en ce que**
- la première grandeur de sortie du régulateur (17) de la tension du circuit intermédiaire prescrit une première grandeur (I_4QS_s) de consigne du courant (I_ZK) d'injection et la deuxième grandeur de sortie du régulateur (18) du courant de la batterie prescrit une deuxième grandeur (ΔI_4QS) de consigne du courant (I_ZK) d'injection,
- on forme la grandeur (I_ZK_s) de prescription partir d'une somme de la première et de la deuxième grandeur (I_4QS_s, ΔI_4QS) de consigne du courant (I_ZK) d'injection et
- un régulateur (19) de courant du circuit intermédiaire régule une valeur (I_ZK_r) réelle du courant (I_ZK) d'injection à la grandeur (I_ZK_s) de prescription et prescrit une grandeur (d1) de commande, dans lequel on commande l'unité (3) de redresseur par l'intermédiaire de la grandeur (d1) de commande pour régler la valeur (I_ZK_r) réelle du courant (I_ZK) d'injection.

4. Procédé suivant l'une des revendications 1 à 3,
**caractérisé en ce que**
l'on pilote le régulateur (17) de tension du circuit intermédiaire sur la base de la valeur (I_Batt_s) de consigne du courant (I_Batt) de la batterie par le fait que l'on fait entrer la valeur (I_Batt_s) de consigne du courant (I_Batt) de la batterie dans un calcul de prescription de la valeur (U_ZK_s) de consigne de la tension (U_ZK) du circuit intermédiaire.

5. Procédé suivant l'une des revendications 1 à 4,
**caractérisé en ce que**
dans un fonctionnement en entraînement du système (1) de traction, on détermine par une puissance d'injection à partir de l'unité (3) de redresseur, une différence entre une puissance (P_4QS_cons_max) maximum d'injection de l'unité (3) de redresseur dans le circuit (4) intermédiaire et une puissance (P_cons_r) réelle, prélevée du circuit (4) intermédiaire, d'un convertisseur (5) de traction du système (1) de traction et à partir de la différence, on calcule une valeur (I_Batt_max) maximum de la batterie du courant (I_Batt) de la batterie.

6. Procédé suivant l'une des revendications 1 à 5,
**caractérisé en ce que**
- dans un fonctionnement en freinage du système (1) de traction, on calcule une puissance (P_feed_max_Batt) maximum d'injection dans la batterie (2) de traction à partir d'une valeur (I_Batt_max) maximum du courant (I_Batt) de la batterie et de la valeur (U_ZK_r) réelle de la tension (U_ZK) du circuit intermédiaire et
- on calcule une puissance (P_PWR_max) maximum d'injection en retour du convertisseur (5) de traction dans le circuit (4) intermédiaire en tenant compte de la puissance (P_feed_max_Batt) maximum d'injection dans la batterie (2) de traction,
dans lequel on transforme par le calcul la puissance (P_PWR_max) maximum d'injection en retour du convertisseur (5) de traction dans le circuit (4) intermédiaire en un couple (M_brake_max) maximum de frein d'une machine (7) d'entraînement mise en fonctionnement au moyen du convertisseur (5) de traction.

7. Procédé suivant la revendications 6,
**caractérisé en ce que**
- un régulateur (20) de protection de surintensité de la batterie régule la valeur (I_Batt_r) réelle du courant (I_Batt) de la batterie à la valeur (I_Batt_max) maximum du courant (I_Batt) de la batterie et prescrit une grandeur (ΔI) de différence pour le courant (I_Batt) de la batterie,
- à partir de la grandeur (ΔI) de différence pour le courant (I_Batt) de la batterie et de la valeur (U_ZK_r) réelle de la tension (U_ZK) du circuit intermédiaire, on calcule une puissance (ΔP) de différence et
- on réduit de la puissance (ΔP) de différence la puissance (P_feed_max_Batt) maximum d'injection dans la batterie (2) de traction.

8. Système (1) de traction, comportant une batterie (2) de traction, une unité (3) de redresseur et un circuit (4) intermédiaire,
**caractérisé en ce que**
l'unité (3) de redresseur est conçue pour transformer une tension de réseau au moyen d'un courant (I_ZK) d'injection pouvant être prescrit en une tension (U_ZK) réglable du circuit (4) intermédiaire, la batterie (2) de traction étant reliée au circuit (4) intermédiaire, et
le système (1) de traction a en outre :
- un régulateur (17) de tension du circuit intermédiaire, qui est mis en œuvre pour une régulation d'une valeur (U_ZK_r) réelle de la tension (U_ZK) du circuit intermédiaire à une valeur (U_ZK_s) de consigne de la tension (U_ZK) du circuit intermédiaire, une première grandeur de sortie pouvant être prescrite par le régulateur (17) de la tension du circuit intermédiaire, et
- un régulateur (18) du courant de la batterie, qui est mis en œuvre pour une régulation d'une valeur (I_Batt_r) réelle d'un courant (I_Batt) de la batterie (2) de traction à une valeur (I_Batt_s) de consigne du courant (I_Batt) de la batterie (2) de traction, dans lequel une deuxième grandeur de sortie peut être prescrite par le régulateur (18) de courant de la batterie, dans lequel une sortie du régulateur (17) de la tension du circuit intermédiaire et une sortie du régulateur (18) du courant de la batterie sont reliées, grâce à quoi la première grandeur de sortie du régulateur (17) de la tension du circuit intermédiaire peut être appliquée avec la deuxième grandeur de sortie du régulateur (18) du courant de la batterie pour la formation d'une grandeur (I_ZK_s) de prescription du courant (I_ZK) d'injection de manière à pouvoir régler, au moyen du courant (I_ZK) d'injection pouvant être prescrit à l'aide de la grandeur (I_ZK_s) de prescription, la valeur (I_Batt_r) réelle du courant (I_Batt) de la batterie en vue de sa régulation.

9. Système (1) de traction suivant la revendication 8,
**caractérisé en ce que**
la batterie (2) de traction est reliée au circuit (4) intermédiaire du système (1) de traction sans interposition d'un régleur (8) de courant continu.

10. Système (1) de traction suivant la revendication 8 ou 9, **caractérisé en ce que**
- une première grandeur (I_4QS_s) de consigne du courant (I_ZK) d'injection peut être prescrite par la première grandeur de sortie du régulateur (17) de la tension du circuit intermédiaire et une deuxième grandeur de (ΔI_4QS) de consigne du courant (I_ZK) d'injection peut être prescrite par la deuxième grandeur de sortie du régulateur (18) du courant de la batterie,
- la grandeur (I_ZK_s) de prescription est une somme de la première et de la deuxième grandeur (I_4QS_s, ΔI_4QS) de consigne du courant (I_ZK) d'injection et
- le système (1) de traction a en outre un régulateur (19) du courant du circuit intermédiaire, qui est mis en œuvre pour une régulation d'une valeur (I_ZK_r) réelle du courant (I_ZK) d'injection à la grandeur (I_ZK_s) de prescription, dans lequel par le régulateur (19) du courant du circuit intermédiaire il peut être prescrit une grandeur (d1) de commande, par laquelle l'unité (3) de redresseur peut être commandée pour régler la valeur (I_ZK_r) réelle du courant (I_ZK) d'injection.

11. Système (1) de traction suivant l'une des revendications 8 à 10, **caractérisé en ce que**
- le régulateur (17) de la tension du circuit intermédiaire est mis en œuvre au sein d'un premier composant (I) de commande de l'unité (3) de redresseur et
- le régulateur (18) du courant de la batterie est mis en œuvre au sein d'un deuxième composant (II) de commande de l'unité (3) de redresseur.

12. Système (1) de traction suivant la revendications 11,
**caractérisé en ce que**
le système (1) de traction comporte en outre :
- un convertisseur (5) de traction,
- un composant (IV) de commande du convertisseur (5) de traction et
- une commande (V) du système de traction,
dans lequel le composant (IV) de commande du convertisseur (5) de traction est relié au moyen de la commande (V) du système de traction au deuxième composant (II) de l'unité (3) de redresseur.

13. Système (1) de traction suivant l'une des revendications 8 à 12, **caractérisé en ce que**
- le système (1) de traction a en outre un régulateur (20) de protection de surintensité de la batterie, qui est mis en œuvre pour une régulation de la valeur (I_Batt_r) réelle du courant (I_Batt) de la batterie à une valeur (I_Batt_max) maximum du courant (I_Batt) de la batterie, dans lequel à une sortie du régulateur (20) de protection de surintensité de la batterie peut être prescrite une grandeur (ΔI) de différence et dans lequel il peut être appliquée à la sortie du régleur (20) de protection de surintensité de la batterie la valeur (U_ZK_r) réelle de la tension (U_ZK) du circuit intermédiaire, grâce à quoi une puissance (ΔP) de différence peut être déterminée pour la réduction d'une puissance (P_feed_max_Batt) maximum d'injection dans la batterie (2) de traction de la puissance (ΔP) de différence.

14. Système (1) de traction suivant l'une des revendications 8 à 13,
**caractérisé en ce que**
le système (1) de traction est conçu pour effectuer un procédé suivant l'une des revendications 1 à 7.

15. Véhicule ferroviaire, **caractérisé par** un système (1) de traction suivant l'une des revendications 8 à 14.
